# EUROPÄISCHE PATENTSCHRIFT

(11) **EP 4 008 617 B1**
(45) Veröffentlichungstag und Bekanntmachung des Hinweises auf die Patenterteilung: **17.04.2024**
(21) Anmeldenummer: 21401051.4
(22) Anmeldetag: 01.12.2021
(51) Int. Cl.: B62J 6/03, B62K 23/06, B62L 3/02

(54) **MODULARES BETÄTIGUNGSSYSTEM FÜR FAHRRÄDER**
MODULAR ACTUATING SYSTEM FOR BICYCLES
SYTEME MODULAIRE D'ACTUATION POUR BICYCLETTES

(30) Priorität: 01.12.2020 DE 102020131854
(43) Veröffentlichungstag der Anmeldung: 08.06.2022
(73) Patentinhaber: SRAM Deutschland GmbH, 97424 Schweinfurt (DE)
(72) Erfinder: Bierwerth, Jochen, 97450 Arnstein (DE); Baumann, Sven, 97508 Grettstadt (DE); Frank, Wolfram, 96052 Bamberg (DE); Weiss, Martin, 97424 Schweinfurt (DE); Shipman, Christopher, Chicago, IL 60640 (US)

(56) Entgegenhaltungen:
- WO-A1-2017/002027
- US-A- 5 128 841

## Beschreibung

Die vorliegende Erfindung betrifft eine elektronische Fahrrad-Betätigungs-einrichtung, eine Befestigungseinrichtung zur Befestigung der Fahrrad-Betätigungseinrichtung an einem Fahrradlenker, sowie ein Betätigungs-system, das die beiden vorgenannten Komponenten umfasst.

Die elektronische Ansteuerung verschiedener Fahrrad-Komponenten wie Schaltwerk, Sattelstütze oder Federbein hat im Radsport in allen Bereichen weite Verbreitung gefunden.

Grundsätzlich umfasst beinah jede elektronische Fahrrad-Betätigungsein-richtung mit Ausnahme von reinen Touchscreen-Anwendungen neben dem elektronischen Teil auch einen mit dem elektronischen Teil gekoppelten mechanischen Teil mit einem beweglich gelagerten Betätigungsbauteil, welches vom Fahrer in einer vorgegebenen Weise bewegt wird, um die jeweilige Fahrrad-Komponente anzusteuern.

Die Entwicklung des elektronischen Teils erfordert einen hohen Aufwand bei der Programmierung, Überprüfung und Zertifizierung im Hinblick auf verschiedene nationale Anforderungen für die Marktzulassung des resultierenden Produkts in verschiedenen Ländern, insbesondere falls eine drahtlose Ansteuerung der Fahrrad-Komponente vorgesehen ist.

Die Entwicklung des mechanischen Teils orientiert sich dagegen in erster Linie an den vielfältigen ergonomischen Anforderungen und Vorlieben der verschiedenen Benutzer.

Um Produktionskosten und Produktionszeit zu reduzieren, ist es daher wünschenswert, den mechanischen Teil so zu gestalten, dass er mit möglichst geringem Aufwand ausgewechselt werden kann, um unterschiedliche mechanische Teile mit der gleichen Elektronik kombinieren zu können, die elektronische Fahrrad-Betätigungseinrichtung also modular aufzubauen.

Um den Bedürfnissen und Vorlieben verschiedener Benutzer Rechnung tragen zu können, ist es zudem wünschenswert, die Betätigungseinrichtung mit mehreren Freiheitsgraden und auf einfache Weise verstellbar an dem Fahrradlenker vorzusehen.

Üblicherweise wird zur Fixierung am Fahrradlenker eine Lenkerschelle verwendet, was die Verschiebung der Fahrrad-Betätigungseinrichtung entlang der Lenkerachse und deren Drehung um die Lenkerachse ermöglicht, also eine Verstellung mit zwei Freiheitsgraden.

Oft ist noch eine weitere Verstellmöglichkeit bzw. ein dritter Freiheitsgrad erwünscht, etwa eine lineare Verstellung der Betätigungseinrichtung relativ zum Lenkerschelle, was im Stand der Technik auf verschiedene Weise realisiert wird. Beispielhaft wird auf US 2011253863 A1 und EP1623918 A1 verwiesen. Die bekannten Lösungen erfordern jedoch mehrere Schritte zur endgültigen Einstellung der Position der Fahrrad-Betätigungseinrichtung am Lenker.

Aus der DE 102019206835 A1 ist eine modulare elektronische Fahrrad-Betätigungseinrichtung mit den Merkmalen des Oberbegriffs von Anspruch 1 bekannt.

Die gattungsgemäße Fahrrad-Betätigungseinrichtung umfasst ein Elektronik-modul zur Ansteuerung mindestens einer Fahrradkomponente, ein separat von dem Elektronikmodul ausgebildetes und auswechselbar an dem Elektronikmodul anbringbares, elektronikfreies Mechanikmodul mit einem Rahmenbauteil und mindestens einem beweglich an dem Rahmenbauteil gelagerten Betätigungsbauteil.

Dabei werden in der DE 102019206835 A1 an dem dort als Trägerelement bezeichneten Rahmenbauteil des Mechanikmoduls sowohl das in einem Gehäuse untergebrachte Elektronikmodul wie auch die Befestigungseinrichtung in Form einer Schelle fixiert.

Zwar ist in der DE 102019206835 A1 grundsätzlich vorgesehen, unterschied-liche, d.h. ein- und mehrteilig ausführte Betätigungsbauteile gegeneinander auszuwechseln, dies ist jedoch mit einem verhältnismäßig hohen Montage-aufwand verbunden, und auch die endgültige Positionierung der Fahrrad-Betätigungseinrichtung erfordert mehrere Schritte.

Vor diesem Hintergrund besteht die Aufgabe der vorliegenden Erfindung darin, die Befestigung und Positionierung der Fahrrad-Betätigungseinrichtung am Lenker zu vereinfachen.

Zur Lösung dieser Aufgabe wird erfindungsgemäß vorgeschlagen, dass die Fahrrad-Betätigungseinrichtung einen teilweise am Elektronikmodul und teilweise am Mechanikmodul ausgebildeten, vorzugsweise zylindrischen Befestigungsvorsprung umfasst, so dass eine Außenfläche des Befestigungsvorsprungs aus einem am Elektronikmodul ausgebildeten Außenflächenabschnitt und einem am Mechanikmodul ausgebildeten Außenflächenabschnitt zusammengesetzt ist.

Die Außenfläche des Befestigungsvorsprungs kann dann von einer Klemmschelle einer Befestigungseinrichtung zur Befestigung der Fahrrad-Betätigungseinrichtung an einem Fahrrad-Lenker umgriffen und so in der Klemmschelle fixiert werden, wobei die beiden Module durch die Klemmschelle zusätzlich auch aneinander fixiert werden. Diese zusätzliche Fixierung erlaubt es, Mechanik- und Elektronikmodul ansonsten in einer sehr einfachen und benutzerfreundlichen Art aneinander zu positionieren und anzubringen, etwa mittels einer Rastverbindung

Insbesondere bei einem zylindrischen Befestigungsvorsprung kann die Fahrrad-Betätigungseinrichtung zusätzlich zur Verstellung gemäß einem dritten Freiheitsgrad um die Mittelachse des Befestigungsvorsprungs bzw. um die Achse der Klemmschelle in dieser gedreht werden. Es liegt dann also eine rotatorische Befestigungsschnittstelle mit vorzugsweise zylindrischer Befestigungsfläche vor.

Alternativ kann der Querschnitt des Befestigungsvorsprungs beispielsweise auch die Form eines regelmäßigen n-Ecks aufweisen, was eine Winkelverstellung der Betätigungseinrichtung relativ zur Klemmschelle um die Mittelachse des Befestigungsvorsprungs in vorgegebenen Winkelschritten von 360°/n ermöglicht.

Gemäß einem bevorzugten Ausführungsbeispiel ist der Befestigungsvorsprung zylindrisch ausgebildet und weist einen Durchmesser auf, der dem Durchmesser eines üblichen Fahrradlenkers entspricht, also zwischen 20mm und 25 mm beträgt, bevorzugt beispielsweise 22,2 mm.

Dies ermöglicht die Verwendung einer nachfolgend noch genauer beschriebenen, besonders bevorzugten Befestigungseinrichtung in Form einer Doppelschelle mit zwei Klemmschellen mit gleichem Durchmesser, von denen eine am Fahrradlenker und die andere an dem Befestigungsvorsprung fixiert wird. Diese Form ermöglicht es insbesondere, dieselbe Befestigungseinrichtung auf beiden Seiten des Lenkers einzusetzen, da jede der beiden Klemmschellen wahlweise am Lenker oder am Befestigungsvorsprung angebracht werden kann.

Die für den Fahrradlenker vorgesehene Klemmschelle kann gewünschtenfalls auch einteilig mit einem Lenkergriff oder mit dem gesamten Lenker bzw. einer anderen Fahrradkomponente ausgebildet sein. In ersten Fall erfolgt die Drehverstellung um die Lenkerachse zusammen mit einer Drehverstellung des Lenkergriffs, das Festziehen der Klemmschelle für den Befestigungsvorsprung der Betätigungseinrichtung erfolgt dann separat.

Um zu verhindern, dass die Fahrrad-Betätigungseinrichtung in unbeabsichtigter Weise aus der zugeordneten Klemmschelle herausfällt, wenn diese nicht ganz festgezogen ist, kann an einem distalen Ende des Befestigungsvorsprungs ein radial vorstehender Sicherungsabschnitt vorgesehen sein, der vorzugsweise an dem Mechanikmodul ausgebildet ist.

Bei der bekannten Betätigungseinrichtung der DE 102019206835 A1 werden über das Betätigungsbauteil zwei im Wesentlichen orthogonal zueinander orientierte Schalter betätigt.

Um die Fahrrad-Betätigungseinrichtung flexibler im Hinblick auf die Verwendung unterschiedlicher Mechanikmodule zu machen, ist bevorzugt vorgesehen, dass das Mechanikmodul und das Elektronikmodul vermittels einer Anordnung von mehreren im Wesentlichen in einer gleichen Schnittstellen-Ebene am Elektronik-Modul angeordneten und parallel zueinander orientierten Schaltern miteinander funktionsmäßig gekoppelt oder koppelbar sind, um durch eine Betätigung des Betätigungsbauteils einen oder mehrere Schalter zu betätigen und damit die Fahrradkomponente anzusteuern.

Es sei an dieser Stelle ergänzt, dass es auch nicht ausgeschlossen sein soll, die funktionsmäßige Kopplung zwischen Elektronikmodul und Mechanikmodul nur über einen einzigen Schalter zu realisieren.

Die gerade beschriebene Konfiguration ermöglicht es dem Benutzer, das Mechanikmodul senkrecht zur Schnittstellen-Ebene auf das Elektronikmodul aufzusetzen und insbesondere werkzeugfrei, beispielsweise durch eine Rastverbindung, an diesem zu fixieren.

Wie nachfolgend noch genauer erläutert, vereinfacht dies auch die Konstruktion von unterschiedlichen Mechanikmodulen mit verschiedenartigen Betätigungsbewegungen, die alle mit dem gleichen Elektronikmodul gekoppelt werden können. Das aufwändige Test- und Zertifizierungsverfahren für das Elektronikmodul muss in diesem Fall nur einmal durchgeführt werden, was Produktionskosten und Produktionszeit erheblich reduzieren kann.

Daher möchte die Anmelderin sich vorbehalten, Schutz auch für eine Fahrrad-Betätigungseinrichtung mit den Merkmalen des Oberbegriffs von Anspruch 1 lediglich in Kombination mit den zusätzlichen Merkmalen von Anspruch 5 oder von Anspruch 7 zu beanspruchen, wobei sämtliche erläuterten Weiterbildungen von Anspruch 1, soweit anwendbar, auch als Weiterbildungen des auf die genannte Weise gebildeten jeweiligen unabhängigen Anspruchs zu verstehen sind.

Das einfache Anbringen und Abnehmen des Mechanikmoduls am bzw. vom Elektronikmodul kann auch im Hinblick auf eine zusätzliche Diebstahlsicherung interessant sein, da das Mechanikmodul nach dem Absteigen einfach entfernt und mitgenommen werden kann, so dass bestimmte Funktionen des Fahrrads ohne Mechanikmodul nicht angesteuert werden können. Es könnte auch ein Schalter bzw. eine Schaltfunktion für eine Fernverriegelung bzw. Fernentriegelung des Rads vorgesehen sein, insbesondere bei der Verwendung an hochwertigen Elektrofahrrädern.

Die Schnittstellen-Ebene kann mit der Oberfläche einer Deckplatte zusammenfallen, in der die Schalter des Elektronikmoduls in entsprechenden Durchgangsöffnungen angeordnet sind. Die Deckplatte bildet eine vereinheitlichte Mechanik-Elektronik-Schnittstelle zur Verbindung mit verschiedenartigen Mechanikmodulen.

Vorzugsweise schneidet die Schnittstellen-Ebene die Außenfläche des Befestigungsvorsprungs und verläuft besonders bevorzugt parallel zu einer Mittelachse des Befestigungsvorsprungs.

Die nach außen freiliegende Stirnseite des Befestigungsvorsprungs kann genutzt werden, um dort ein zusätzliches Betätigungselement vorzusehen.

Die Betätigungseinrichtung kann auch in Kombination mit zusätzlichen, als Blips bezeichneten Satellitenschaltern verwendet werden, die an einer beliebigen Stelle am Fahrrad angebracht werden, wobei die gleiche Komponente sowohl durch die Betätigungseinrichtung als auch durch den Satellitenschalter angesteuert werden kann.

Gemäß einem weiteren Aspekt der Erfindung wird eine Befestigungseinrichtung zur Befestigung einer erfindungsgemäßen Fahrrad-Betätigungseinrichtung vorgeschlagen, die eine Klemmschelle umfasst, welche dazu ausgebildet ist, an dem Befestigungsvorsprung der Fahrrad-Betätigungseinrichtung fixiert zu werden. Die Klemmschelle bildet also ebenfalls eine rotatorische Befestigungsschnittstelle für den Befestigungsvorsprung.

Wie zuvor schon angedeutet, umfasst diese Befestigungsvorrichtung bevorzugt eine weitere Klemmschelle zur Fixierung der Befestigungseinrichtung am Fahrradlenker, ist also als Doppelschelle ausgebildet, wobei die beiden Klemmschellen bevorzugt den gleichen Durchmesser und die gleiche Form aufweisen.

Eine besonders komfortable Positionierung der Betätigungseinrichtung am Lenker ergibt sich, wenn die Befestigungseinrichtung dazu ausgebildet ist, die beiden Klemmschellen durch ein einziges Befestigungsmittel, bevorzugt eine einzige Schraube, anzuziehen. Es ist also nur eine einzige Klemmschraube zum gleichzeitigen Verstellen aller Freiheitsgerade nötig. Somit entfällt die beim Stand der Technik bekannte, oft komplizierte Einstellung der Betätigungseinrichtung bzw. des Fahrrad-Schalthebels, bei der oft mehrere Schrauben gelöst und mehrere Verstell-Freiheitsgrade gleichzeitig mit einer Hand jongliert und justiert werden müssen, während mit der anderen Hand die diversen Schrauben mehr oder weniger gleichzeitig wieder angezogen werden müssen.

Dabei können die beiden Klemmschellen einstückig als Doppelschellen-Bauteil oder als zwei separate Klemmschellen-Bauteile ausgebildet sein.

Um das Betätigungsbauteil in eine ergonomisch günstige Lage zu bringen, kann vorgesehen sein, dass die Schellenachsen der beiden Klemmschellen um einen Winkel gegeneinander geneigt sind, der beispielsweise zwischen 15° und 30° beträgt und vorzugsweise etwa 20° beträgt. Winkel von 10° bis 90° werden produktseitig ebenfalls in Betracht gezogen und sollen daher nicht ausgeschlossen sein. In anderen Worten sind die beiden Klemmaufnahmen gegeneinander geneigt. Im Falle zweier separater Klemmschellen-Bauteile ergibt sich ein weiterer Freiheitsgrad in der Positionierung durch Einstellung dieses Neigungswinkels.

Um die gerade beschriebene Doppelschelle auf beiden Seiten der Lenkstange einsetzen zu können, wobei die Klemmschraube in beiden Fällen zum Fahrer zeigen kann, ist bevorzugt, dass die Befestigungseinrichtung mit zwei gleichartigen Klemmschellen spiegelsymmetrisch bezüglich einer Symmetrieebene ausgebildet ist, die zwischen den beiden Klemmschellen hindurch verläuft.

Um die erfindungsgemäße Fahrrad-Betätigungseinrichtung auch in Kombination mit bereits bestehenden Lenkerschellen verwenden zu können, etwa einer sogenannten "Matchmaker-Schelle", die in der Druckschrift US 2011253863 A1 beschrieben ist, kann aber auch vorgesehen sein, dass die Befestigungseinrichtung neben der Klemmschelle zum Umgreifen des Befestigungsvorsprungs der Fahrrad-Betätigungseinrichtung eine Verbindungsschnittstelle zur Verbindung des Befestigungseinrichtung mit einer separaten Lenkerschelle umfasst, wobei die Verbindungsschnittstelle ein Langloch oder eine lineare Anordnung mehrerer Befestigungsöffnungen aufweist.

Schließlich wird auch Schutz beantragt für ein modulares Fahrrad-Betätigungssystem mit einer erfindungsgemäßen modularen elektronischen Fahrrad-Betätigungseinrichtung sowie einer erfindungsgemäßen Befestigungseinrichtung, wie sie jeweils zuvor beschrieben wurden.

Nachfolgend wird die vorliegende Erfindung anhand einiger bevorzugter Ausführungsbeispiele näher erläutert, die in den beiliegenden Figuren dargestellt sind. Dabei zeigen:
- Fig. 1: eine Seitenansicht eines Fahrrads mit einem modularen Betätigungssystem gemäß einem ersten Ausführungsbeispiel der vorliegenden Erfindung;
- Fig. 2: eine vergrößerte perspektivische Ansicht der rechten Seite des Lenkers des Fahrrads aus Figur 1 mit dem daran angebrachten modularen Betätigungssystem, jedoch ohne Bremsbedieneinrichtung;
- Fig. 3: eine perspektivische Ansicht der Fahrrad-Betätigungseinrichtung aus Figur 2;
- Fig. 4: eine Darstellung des Gegenstands von Fig. 3 im teilweise zerleg-ten Zustand;
- Fig. 5: eine perspektivische Ansicht der Unterseite des Elektronikmoduls der Fahrrad-Betätigungseinrichtung aus Fig. 2;
- Fig. 6: eine perspektivische Ansicht der Oberseite des Gegenstands von Fig. 5;
- Fig. 7: eine Explosionsdarstellung des Gegenstands von Fig. 6;
- Fig. 8: eine weitere Explosionsdarstellung des Gegenstands von Fig. 6;
- Fig. 9-11: schematische Querschnittansichten verschiedener Ausführungsbeispiele von Fahrrad-Betätigungseinrichtungen mit unterschiedlichen Mechanikmodulen zur Illustration unterschiedlicher Betätigungsmechanismen;
- Fig. 12: eine vereinfachte perspektivische Ansicht des Gegenstands von Fig. 2 zur Illustration der verschiedenen Einstellmöglichkeiten;
- Fig. 13: eine Explosionsdarstellung einer zweiten Ausführungsvariante einer Befestigungseinrichtung;
- Fig. 14: den Gegenstand von Fig. 13 im zusammengebauten Zustand;
- Fig. 15: eine perspektivische Ansicht der ersten Ausführungsvariante einer Befestigungseinrichtung;
- Fig. 16: eine perspektivische Ansicht einer dritten Ausführungsvariante einer Befestigungseinrichtung;
- Fig. 17: eine perspektivische Ansicht zur Illustration der Montage der Befestigungseinrichtung aus Fig. 16 an einem Fahrradlenker vermittels einer bekannten Montageeinrichtung;
- Fig. 18: eine Explosionsdarstellung der Befestigungseinrichtung und der Montageeinrichtung aus Fig. 17;
- Fig. 19: eine vereinfachte Darstellung zur Illustration der Verwendung der erfindungsgemäßen Fahrrad-Betätigungseinrichtung an einem Rennrad-Lenker;
- Fig. 20: eine vereinfachte Darstellung zur Illustration der Verwendung der erfindungsgemäßen Fahrrad-Betätigungseinrichtung an einem Triathlon-Lenker;
- Fig. 21: eine perspektivische Ansicht einer Fahrrad-Betätigungseinrichtung nach einem zweiten Ausführungsbeispiel mit geändertem Mechanikmodul;
- Fig. 22: eine weitere perspektivische Ansicht des Gegenstands von Fig. 21;
- Fig. 23: eine Explosionsdarstellung des Gegenstands von Fig. 21;
- Fig. 24: eine weitere Explosionsdarstellung des Gegenstands von Fig. 21;
- Fig. 25: eine perspektivische Ansicht einer Fahrrad-Betätigungseinrichtung nach einem dritten Ausführungsbeispiel mit modifizierten Mechanikmodul;
- Fig. 26: eine Explosionsdarstellung des Gegenstands von Fig. 25.
- Fig. 27: eine perspektivische Ansicht einer Fahrrad-Betätigungseinrichtung nach einem vierten Ausführungsbeispiel mit modifiziertem Mechanikmodul;
- Fig. 28: eine Explosionsdarstellung des Gegenstands von Fig. 27,
- Fig. 29: eine perspektivische Ansicht einer Fahrrad-Betätigungseinrichtung nach einem fünften Ausführungsbeispiel mit modifiziertem Mechanikmodul;
- Fig. 30: eine Explosionsdarstellung des Gegenstands von Fig. 29;
- Fig. 31: eine weitere Explosionsdarstellung des Gegenstands von Fig. 29;
- Fig. 32: eine Explosionsdarstellung einer Fahrrad-Betätigungseinrichtung nach einem sechsten Ausführungsbeispiel mit modifiziertem Mechanikmodul;
- Fig. 33: eine weitere Ansicht des Gegenstands von Fig. 32;
- Fig. 34 -: Fig. 36 Seitenansichten des Gegenstands von Fig. 32/33 mit unterschiedlichen Betätigungskappen für das Mechanikmodul;
- Fig. 37: eine Explosionsdarstellung einer Fahrrad-Betätigungseinrichtung nach einem siebten Ausführungsbeispiel mit einem als Drehgriffschalter ausgebildeten Mechanikmodul;
- Fig. 38: eine perspektivische Ansicht einer Fahrrad-Betätigungseinrichtung nach einem achten Ausführungsbeispiel mit einer Befestigungseinrichtung ähnlich Fig. 2, 12 und 15;
- Fig. 39: eine perspektivische Ansicht der Betätigungseinrichtung gemäß Fig. 38 mit einer Befestigungseinrichtung ähnlich Fig. 16 bis 18;
- Fig. 40: die Betätigungseinrichtung gemäß Fig. 38 und 39 in einer Aufsichts-Explosionsdarstellung; und
- Fig. 41: die Betätigungseinrichtung gemäß Fig. 38 bis 40 in einer Untersichts-Explosionsdarstellung.

Es wird darauf hingewiesen, dass es sich bei den Figuren um vereinfachte und schematisierte Darstellungen handelt, die im Wesentlichen das Prinzip der Erfindung veranschaulichen sollen. Um die Figuren nicht zu überfrachten sind nicht immer alle Merkmale in jeder Darstellung mit Bezugszeichen versehen, sondern in erster Linie nur diejenigen Merkmale, die zur Erläuterung der jeweiligen Figuren benötigt werden. Dies gilt insbesondere, wenn erkennbar mehrere identische Elemente in der gleichen Figur vorgesehen sind.

Gleiche oder einander entsprechende Merkmale verschiedener Ausführungsbeispiele werden jeweils mit den gleichen Bezugszeichen versehen, und die verschiedenen Ausführungsbeispiele werden in erster Linie nur insoweit erläutert, als sie sich vom jeweils ersten Ausführungsbeispiel unterscheiden, auf dessen Beschreibung ansonsten verwiesen wird.

Sofern nicht explizit anders angegeben, beziehen sich in der vorliegenden Anmeldung Richtungsangaben wie vorne, hinten, oben, unten, links und rechts auf Richtungen, wie sie sich für einen Fahrer ergeben, der in üblicher Weise auf einem mit der Fahrrad-Betätigungseinrichtung ausgestatteten Fahrrad sitzt, welches auf einem horizontalen Untergrund steht oder fährt.

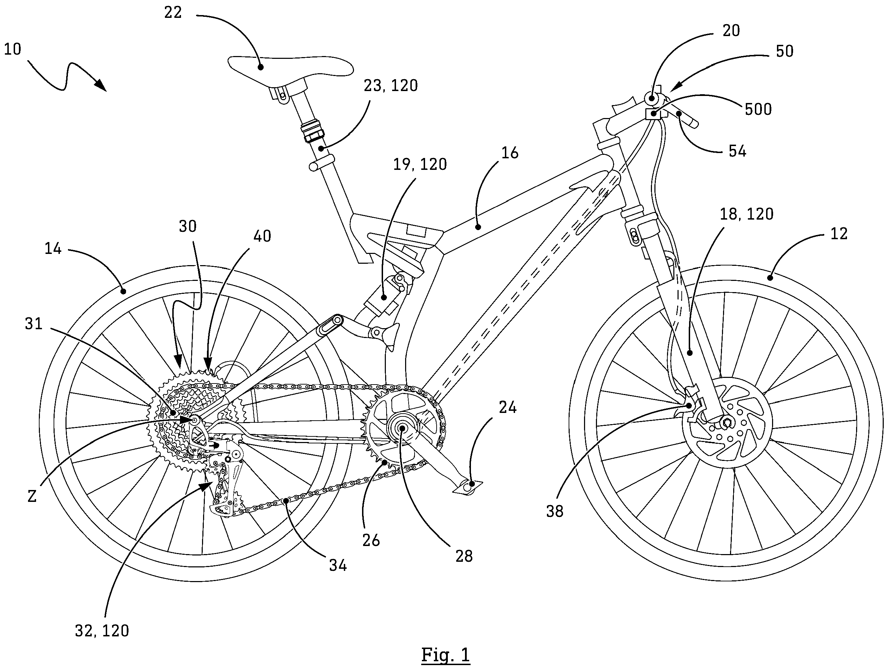

Ein in Figur 1 allgemein mit 10 bezeichnetes Fahrrad weist in an sich bekannter Weise ein Vorderrad 12, ein Hinterrad 14 und einen Rahmen 16 auf. Das Vorderrad 12 ist drehbar an unteren Enden einer Vorderradgabel 18 gelagert, welche an ihrem oberen Ende drehbar am Rahmen 16 gehalten ist und einen Lenker 20 zum Steuern des Fahrrads 10 trägt. Das Hinterrad 14 ist um eine Radachse Z drehbar an einem mittels Federbein 19 gefederten hinteren Ende des Rahmens 16 gelagert.

Vorzugsweise umfasst das Fahrrad 10 auch eine Bremsanlage, beispielsweise in Form einer vorderen Scheibenbremse 38 oder/und einer hinteren Scheibenbremse 40. Zur Bedienung der Bremsanlage ist mindestens eine Bremsbedieneinrichtung 50 mit einem Handbremshebel 54 vorgesehen.

Der Rahmen 16 trägt ferner einen Sattel 22 sowie eine Kurbelbaugruppe mit Tretkurbeln 24 und einem daran befestigten vorderen Kettenblatt 26. Die Kurbelbaugruppe ist um eine Tretlagerachse 28 drehbar am Rahmen 16 montiert. Am Hinterrad 14 ist konzentrisch zur Radachse Z ein Ritzelpaket 30 montiert, welches eine Mehrzahl von Ritzeln 31 mit unterschiedlichen Zahnzahlen trägt. Im illustrierten Ausführungsbeispiel ist ein Ritzelpaket 30 mit insgesamt zwölf Ritzeln 31 vorgesehen und das vordere Kettenblatt 26 ist als Einzelrad vorgesehen, so dass insgesamt zwölf Schaltstufen einstellbar sind. Im Rahmen der Erfindung können selbstverständlich andere Schaltungsauslegungen zum Einsatz kommen, insbesondere auch Mehrfachkettenblätter, zwischen denen mittels eines vorderen Kettenwerfers geschaltet werden kann.

Zur Einstellung der Schaltstufen des hinteren Ritzelpakets 30 kommt eine hintere Kettenschaltung mit einem hinteren Schaltwerk 32 zum Einsatz, welches ebenfalls an einem hinteren Ende des Rahmens 16 befestigt ist und Teil einer Stelleinrichtung bildet. Eine Kette 34 umläuft das Ritzelpaket 30 und das vordere Kettenblatt 26 und durchläuft das Schaltwerk 32, um Antriebskraft von dem vorderen Kettenblatt 26 auf das Ritzelpaket 30 und damit auf das Hinterrad 14 zu übertragen. Das Schaltwerk 32 ist dabei in der Lage, die Kette 34 in axialer Richtung bezüglich der Drehachse Z des Hinterrads 14 zu verstellen, um die Kette 34 wahlweise mit einem der Ritzel 31 des Ritzelpakets 30 auszurichten und dementsprechend auf das ausgewählte Ritzel 31 zu führen.

Zur Einstellung des Schaltwerks 32 in eine gewünschte Schaltstufe durch einen Fahrer ist am Lenker 20 auf der vom Fahrer aus gesehen rechten Seite ein (in Fig. 1 nur schematisch dargestellten) Fahrrad-Betätigungssystem 500 gemäß einem ersten bevorzugten Ausführungsbeispiel der Erfindung vorgesehen.

Dabei überträgt die modulare elektronische Fahrrad-Betätigungseinrichtung 100 (kurz MEA für "modular electronic actuator") des Fahrrad-Betätigungssystems 500 Befehle zur Steuerung des Schaltwerks 32 als anzusteuernde Fahrradkomponente 120 beispielsweise drahtlos durch eine Funkverbindung zwischen einem vorzugsweise in der Fahrrad-Betätigungseinrichtung 100 integrierten Funksender und einem im Schaltwerk 32 integrierten Funkempfänger. Aber auch eine kabelgebundene Übertragung der Befehle zwischen Fahrrad-Betätigungseinrichtung 100 und der anzusteuernden Fahrradkomponente 120 ist möglich.

Alternativ sind auch andere Varianten denkbar und im Rahmen der vorliegenden Erfindung nutzbar, um Bedienbefehle des Fahrers von der FahrradBetätigungseinrichtung 100 an eine geeignete Fahrrad-Komponente 120 zu übertragen, beispielsweise zur Einstellung einer Federgabel 18, einer Dämpfung oder der Höhe einer Sattelstütze 23.

Auch wenn es sich bei dem in Figur 1 dargestellten Fahrrad um ein Mountainbike handelt, ist die Erfindung bei beliebigen anderen Fahrrad-Typen anwendbar, etwa Rennrädern oder Triathlon-Rädern.

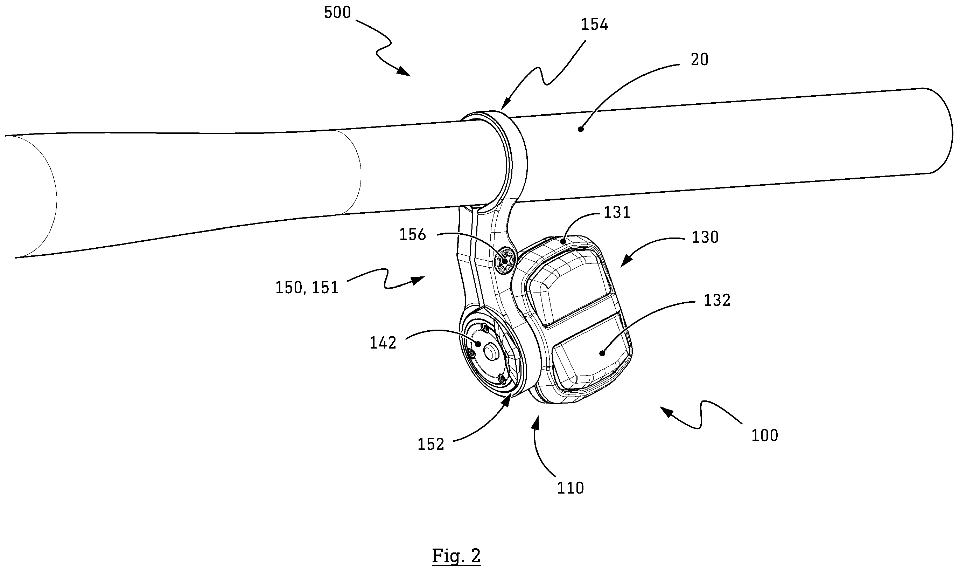

Figur 2 zeigt in einer vergrößerten perspektivischen Ansicht noch einmal das an dem Fahrradlenker 20 angebrachte modulare Betätigungssystem 500 mit der Befestigungseinrichtung 150 und der daran angebrachten modularen elektronischen Fahrrad-Betätigungseinrichtung 100 gemäß einem ersten Ausführungsbeispiel der vorliegenden Erfindung. Aus Gründen der Übersichtlichkeit wurde dabei auf die Darstellung der Bremsbedieneinrichtung verzichtet.

Dabei ist die Befestigungseinrichtung 150 im in Figur 2 illustrierten Ausführungsbeispiel als einstückiges Doppelschellen-Bauteil 151 ausgebildet, mit zwei im Wesentlichen gleichartigen Klemmschellen 152,154, von denen die eine zur Fixierung der Befestigungseinrichtung 150 am Lenker 20 dient, die andere zur Fixierung der Fahrrad-Betätigungseinrichtung 100 an der Befestigungseinrichtung 150. Insbesondere ist zum gleichzeitigen Anziehen beider Klemmschellen 152, 154 bei dem dargestellten Doppelschellen-Bauteil 151 nur eine einzige Schraube 156 notwendig.

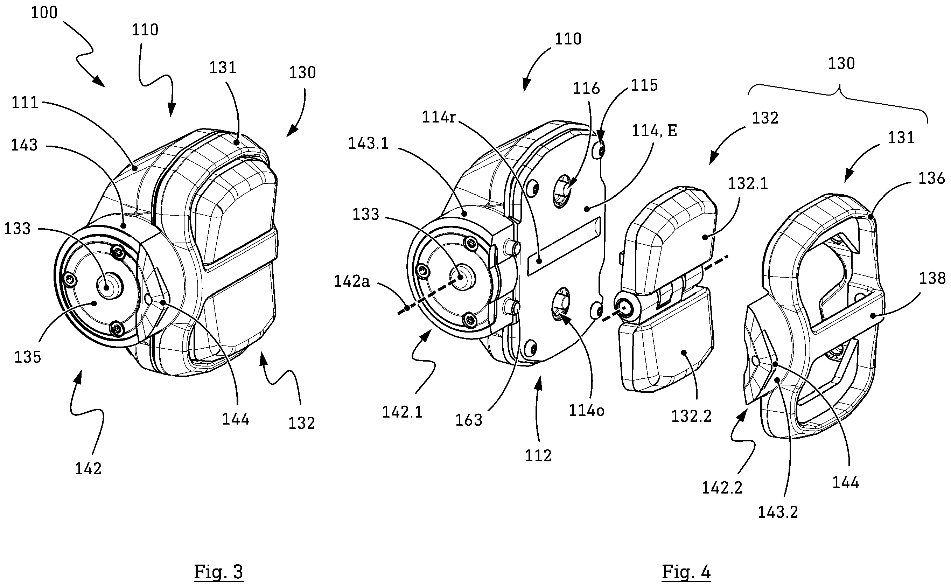

Die elektronische Fahrradbetätigungseinrichtung 100 aus Figur 2 ist separat nochmals in den Figuren 3 und 4 dargestellt, in Figur 3 in einer perspektivischen Ansicht im zusammengebauten Zustand, in Figur 4 in einer Teil-Explosionsdarstellung.

Die Fahrrad-Betätigungseinrichtung 100 umfasst ein Elektronikmodul 110 in dem sämtliche elektronische Komponenten der Betätigungseinrichtung aufgenommen sind, sowie ein elektronikfreies Mechanikmodul 130.

Das Elektronikmodul 110 (kurz auch als ECM bezeichnet für "electronic controller module") weist einen wannenförmigen Gehäuseabschnitt 111, eine flache Deckplatte 114 sowie den am Elektronikmodul 110 ausgebildeten Teil 142.1 des Befestigungsvorsprungs 142 auf.

Die Deckplatte 114 ist mit einigen Schrauben 115 am Gehäuseabschnitt 111 fixiert und deckt diesen auf der dem Mechanikmodul 130 zugewandten Seite ab. In Durchgangsöffnungen 114o der Deckplatte 114 sind mehrere Schalter 116 angeordnet, vermittels denen das Elektronikmodul 110 mit dem Mechanikmodul 130 funktionsmäßig gekoppelt ist. Die Deckplatte 114 bildet also eine vereinheitlichte Mechanik-Elektronik-Schnittstelle (kurz UMI für "unified mechanical interface") zur Verbindung mit verschiedenartigen Mechanikmodulen.

Die Schalter 116, vorliegend zwei einander diametral gegenüberliegende Schalter 116, sind in einer einzigen Schnittstellenebene E angeordnet und im Hinblick auf ihre Betätigungsrichtung parallel zueinander orientiert. Genau zwischen den beiden Schaltern 116 kann in der Oberfläche der Deckplatte 114 eine rillenförmige Vertiefung 114r vorgesehen sein, um eine ungestörte Schwenkbewegung des Betätigungsbauteils 132 zur Betätigung der Schalter 116 zu ermöglichen. Auch wenn im dargestellten Beispiel genau zwei Schalter 116 dargestellt sind, können mehr oder weniger Schalter vorgesehen sein.

Der elektronikmodulseitige Teil 142.1 des Befestigungsvorsprungs 142 ist seitlich an dem Gehäuseabschnitt 111 vorgesehen, weist die Form eines Zylindersegments auf und ist stirnseitig mit einer Abdeckplatte 135 abgedeckt, in der mittig ein weiteres Betätigungselement 133 in Form eines Druckschalters ("AXS-Button") vorgesehen ist. An einer Seitenfläche des Zylindersegments können zum Beispiel stiftartige Positioniervorsprünge 163 oder Positioniernocken vorgesehen sein, die mit entsprechenden Positionierausnehmungen am Rahmenbauteil 131 des Mechanikmoduls 130 zusammenwirken.

Wie insbesondere Fig. 4 zeigt, schneidet im dargestellten Beispiel die durch die Deckplatte 114 gegebene Schnittstellenebene E die Außenfläche 143 des zylindrischen Befestigungsvorsprungs 142.

Das Mechanikmodul 130 (kurz auch als HMI bezeichnet für "human machine interface") weist ein vorliegend einstückig ausgebildetes Rahmenbauteil 131 sowie ein um eine Achse 132a schwenkbar am Rahmenbauteil 131 gelagertes Betätigungsbauteil 132 auf.

Das Betätigungsbauteil 132 ist im vorliegenden Beispiel zweiteilig ausgeführt, mit zwei voneinander unabhängig um die Achse 132a schwenkbar gelagerten Schaltelementen 132.1 und 132.2, die in der Art eines Türscharniers miteinander verbunden sind. Die auf dem bzw. oberhalb von dem Elektronikmodul 110 angeordneten Schaltelemente 132.1 und 132.2 können zum Beispiel durch den Daumen des Fahrers bedient werden (vgl. Fig. 2).

Alternativ ist es auch möglich, das Betätigungsbauteil in ähnlicher Form aber einteilig auszuführen, wobei in diesem Fall eine gleichzeitige Betätigung der beiden Schalter 116 wie beim dargestellten Beispiel allerdings nicht mehr möglich ist. Generell können unterschiedliche Form-Varianten des Betätigungsbauteils zur persönlichen ergonomischen Anpassung angeboten werden, die vom Benutzer ausgetauscht werden können.

Das Rahmenbauteil 131 weist einen Rahmenabschnitt 136 mit der Grundform eines abgerundeten Rechtecks, eine Schwenkachsenabdeckung 138 und den mechanikmodulseitigen Teil 142.2 des Befestigungsvorsprungs 142 auf. Auch letzterer ist in Form eines Zylindersegments ausgebildet, welches aber deutlich kleiner ist als das des elektronikmodulseitigen Teils 142.1 und diesen zum zylindrischen Befestigungsvorsprung 142 ergänzt.

Dabei ist auch eine Außenfläche 143 des Befestigungsvorsprungs 142 teilweise am Elektronikmodul 110 und teilweise am Mechanikmodul 130 ausgebildet, wobei die entsprechenden Außenflächen-Abschnitte der beiden Module mit 143.1 und 143.2 bezeichnet werden.

Auf diese Weise kann durch die Klemmschelle 152 der Befestigungseinrichtung 150 gleichzeitig das Mechanikmodul 130 am Elektronikmodul 110 gesichert und die gesamte Betätigungseinrichtung 100 um die Klemmschellen-Achse 152a drehverstellbar am Fahrrad-Lenker 20 fixiert werden.

Am distalen Ende des mechanikmodulseitigen Teils 142.2. des Befestigungsvorsprungs 142 ist optional ein radial nach außen vorstehender Sicherungsabschnitt 144 vorgesehen, der verhindert, dass das Mechanikmodul 130 in unbeabsichtigter Weise aus der Klemmschelle 152 der Befestigungseinrichtung 150 ("Infinity Clamp" ICL) herausfällt.

Am Mechanikmodul 130 wie auch am Elektronikmodul 110 können zueinander passende Raststrukturen 130r, 110r vorgesehen sein, die dazu konfiguriert sind, das Mechanikmodul 130 in einer einfachen Rastverbindung mit dem Elektronikmodul 110 lösbar und werkzeugfrei zu verbinden.

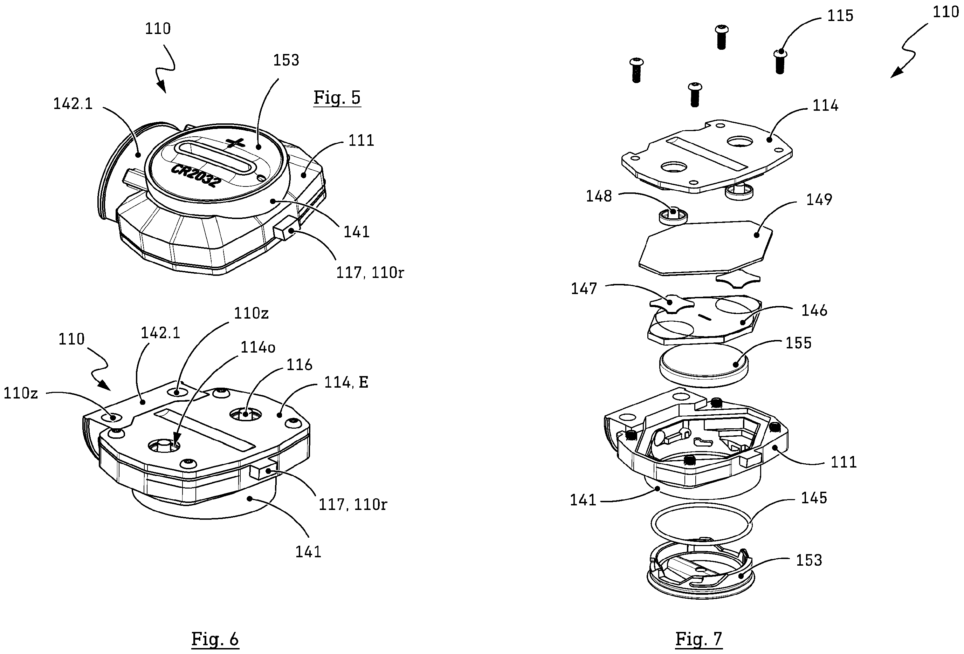

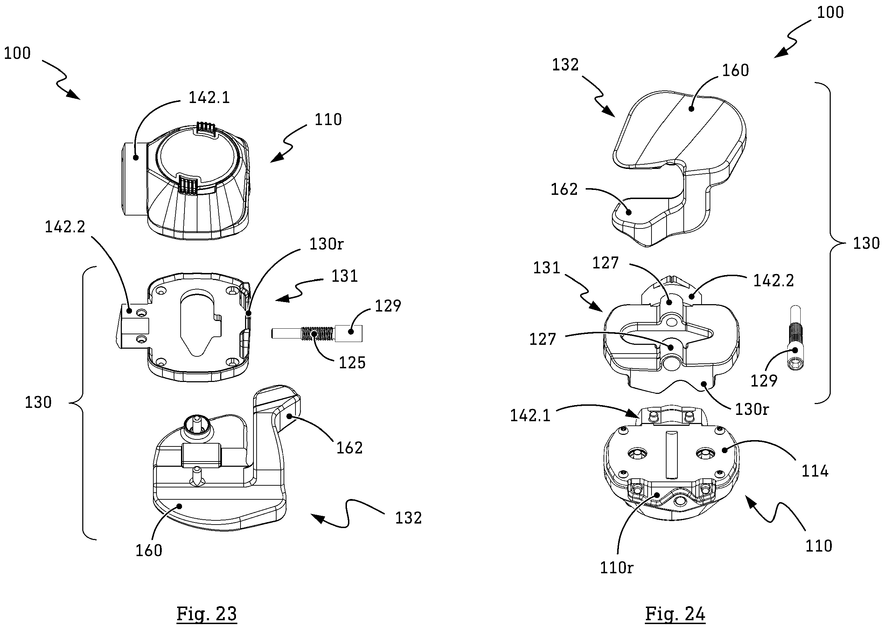

In den Darstellungen der Figuren 5 und 6 ist von diesen Raststrukturen insbesondere ein Rastvorsprung 117 am Elektronikmodul 110 zu erkennen (vgl. Fig. 6). Die zugehörigen Raststrukturen auf Seiten des Mechanikmoduls 130 sind in den Darstellungen des zweiten Ausführungsbeispiel besser erkennbar (vgl. Fig. 23, 24), dort allerdings etwas modifiziert. Dem Fachmann sind jedoch zahlreiche Ausgestaltungsbeispiele für geeignete Raststrukturen bekannt.

Die Figuren 5 und 6 zeigen zwei unterschiedliche perspektivische Ansichten des Elektronikmoduls 110 die neben dem Rastvorsprung 117 insbesondere das an der Unterseite des Gehäuseabschnitts 111 vorgesehene Batteriefach 141 zeigen, auf das über einen übliche Batteriefachdeckel 153 zugegriffen werden kann.

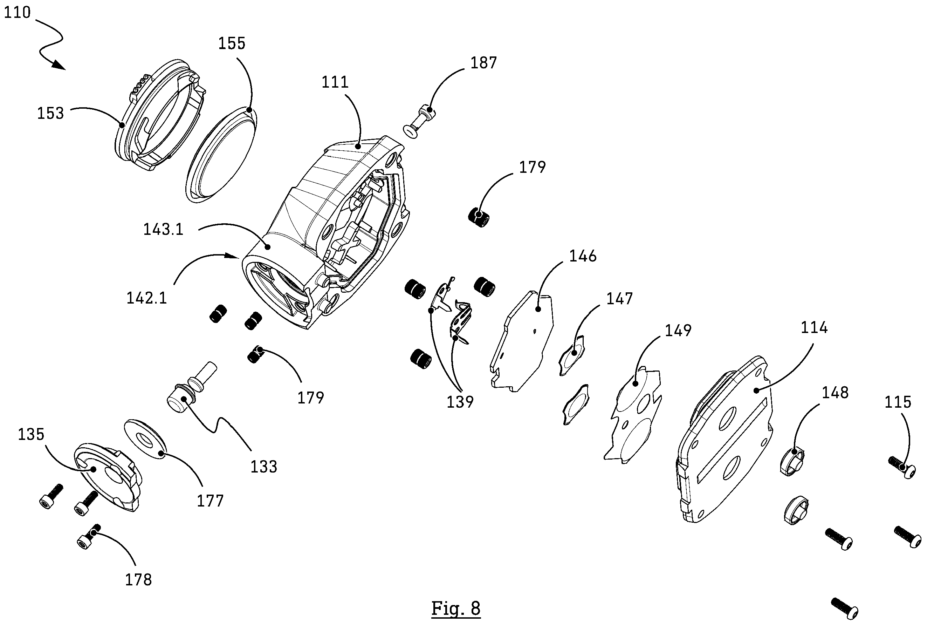

Die Explosionsdarstellungen der Figuren 7 und 8 ermöglichen einen Überblick über Komponenten, die in dem Elektronikmodul 110 des Ausführungsbeispiels enthalten sein können.

Insbesondere kann die Steuerelektronik der Betätigungseinrichtung 100 auf einer Steuerplatine 146 vorgesehen sein. Schaltelemente auf der Steuerplatine 146 können über Schnappscheiben 147 und Stößel 148 betätigt werden, welche gemeinsam die Schalter 116 bilden.

Schrauben 115 und 178 zur Befestigung der Deckplatte 114 bzw. der Abdeckplatte 135 am Gehäuseabschnitt 111 bzw. an der Stirnseite des elektronikmodulseitigen Teils 142.1 des Befestigungsvorsprungs können in Gewindeeinsätze 179 bzw. 189 eingeschraubt werden, die an dem Elektronikmodul 110 in geeigneter Weise fixiert sind.

Bei der optionalen Komponente 187 in Fig. 8 handelt es sich um einen Lichtleiter aus transparentem Polycarbonat für die Anzeige-LED des Elektronikmoduls. Dieser kann mit einem O-Ring aus Gummi abgedichtet sein.

Die Energieversorgung der Steuerplatine 146 kann zum Beispiel über eine Batterie 155 erfolgen, die über Batteriekontakte 139 mit der Platine 146 verbunden ist. Gegen das Eindringen von Feuchtigkeit und Schutz sind optionale Dichtungen 145, 149 und 177 vorgesehen. Auch ein wiederaufladbarer Energiespeicher, die Energieversorgung über Solarzellen oder über Vibrations-Schallwandler, die elektrische Energie aus den während der Fahrt auftretenden Stößen und Vibrationen generieren, wobei die Energie in einem wieder aufladbaren Energiespeicher wie beispielsweise einem Akkumulator oder Kondensator gespeichert wird, oder über eine beliebige externe Energiequelle sind mögliche Alternativen. Auch kann an der Betätigungseinrichtung eine beispielsweise induktive oder kabelgebundene Schnittstelle zum Aufladen eines wiederaufladbaren Energiespeichers vorgesehen sein.

Dadurch, dass bei der Fahrradbetätigungseinrichtung 100 eine Mechanik-Elektronik-Schnittstelle 112 im Wesentlichen in einer einzigen SchnittstellenEbene E verläuft, die durch die Deckplatte 114 des Elektronikmoduls 110 gegeben sein kann, kann das Mechanikmodul einfach auf das Elektronikmodul senkrecht zur Schnittstellen-Ebene E aufgesetzt und beispielsweise in einer Rastverbindung mit diesem verbunden werden.

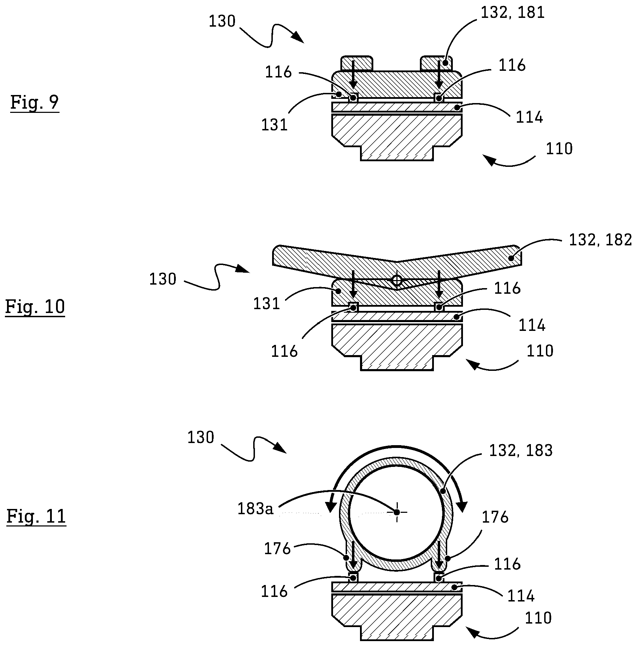

Auch können in einfacher Weise verschiedene Arten von Mechanikmodulen 130 mit unterschiedlichen Betätigungsmechanismen konstruiert werden, die alle mit dem gleichen Elektronikmodul 110 koppelbar sind. Drei Beispiele sind in den Figuren 9 bis 11 stark vereinfacht und schematisch dargestellt.

Dabei umfasst das Betätigungsbauteil 132 im Beispiel aus Fig. 9 zwei separate, linear bewegbare Druckschalter 181, im Beispiel aus Fig. 10 einen einteiligen Wippschalter oder Schaltpaddel 182 und im Beispiel aus Fig. 11 einen Drehgriffschalter 183. Die in Figur 11 nur schematisch angedeuteten Betätigungsnocken 176 des Drehgriffschalters 183 können eine angewinkelte bzw. gekrümmte Kontaktfläche zum Schalter 116 hin aufweisen, die insbesondere schneckenartig ausgeführt sein, ggf. auch radial abgestuft, um einen gewünschte Betätigungsbewegung durch Rotieren des Drehgriffschalters um seine Mittelachse 183a um einen größeren Winkelbetrag zu erhalten, als es im Beispiel gemäß Fig. 11 der Fall ist.

So können verschiedene Arten von Mechanikmodulen mit unterschiedlichen Betätigungsarten (rotatorisch, schwenkend, drückend etc.), für unterschiedliche Vorlieben oder Preisklassen zur Kombination mit dem gleichen Elektronikmodul angeboten werden.

Auch das Rahmenbauteil 131 lässt sich dank der Erfindung im Sinne der Produktdiversifizierung für unterschiedliche Varianten, Preispunkte, Qualitätsstufen, Materialien vom Hersteller unterschiedlich gestalten und wird vorzugsweise nicht als Einzelteil angeboten. Der Benutzer kann jedoch unterschiedliche Betätigungsbauteile 132, soweit konstruktiv möglich, an einem gegebenen Rahmenbauteil anbringen.

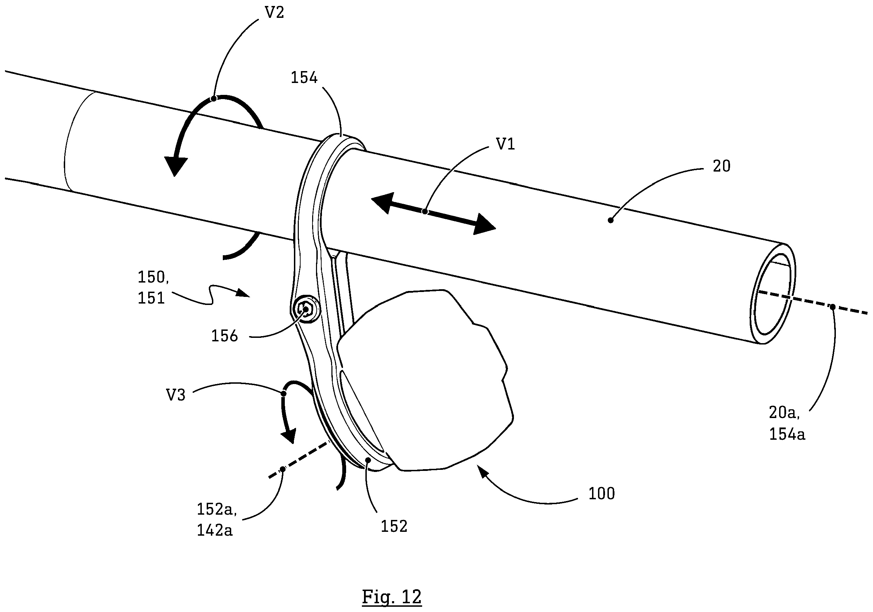

Fig. 12 illustriert die verschiedenen Verstellmöglichkeiten der FahrradBetätigungseinrichtung 100 am Lenker 20.

Zum einen kann die Fahrrad-Betätigungseinrichtung 100 in einer ersten Verstellbewegung V1 zusammen mit der Befestigungseinrichtung 150 entlang der Lenkerachse 20a bzw. der damit zusammenfallenden Schellenachse 154a verschoben werden.

Zum anderen kann die Fahrrad-Betätigungseinrichtung 100 zusammen mit der Befestigungseinrichtung 150 in einer Verstellbewegung V2 um die Lenkerachse 20a herum verschwenkt werden.

Schließlich kann die Fahrrad-Betätigungseinrichtung 100 relativ zur Befestigungseinrichtung 150 in einer Verstellbewegung V3 um die Schellenachse 152a bzw. die damit zusammenfallende Mittelachse 142a des Befestigungsvorsprungs 142 verdreht werden.

Um sämtliche Verstellbewegungen in allen drei Freiheitsgraden durchzuführen und anschließend die Betätigungseinrichtung 100 in der gewünschten Position und Stellung am Lenker 20 zu fixieren, ist dabei nur das Lockern, bzw. Anziehen einer einzigen Schraube 156 nötig.

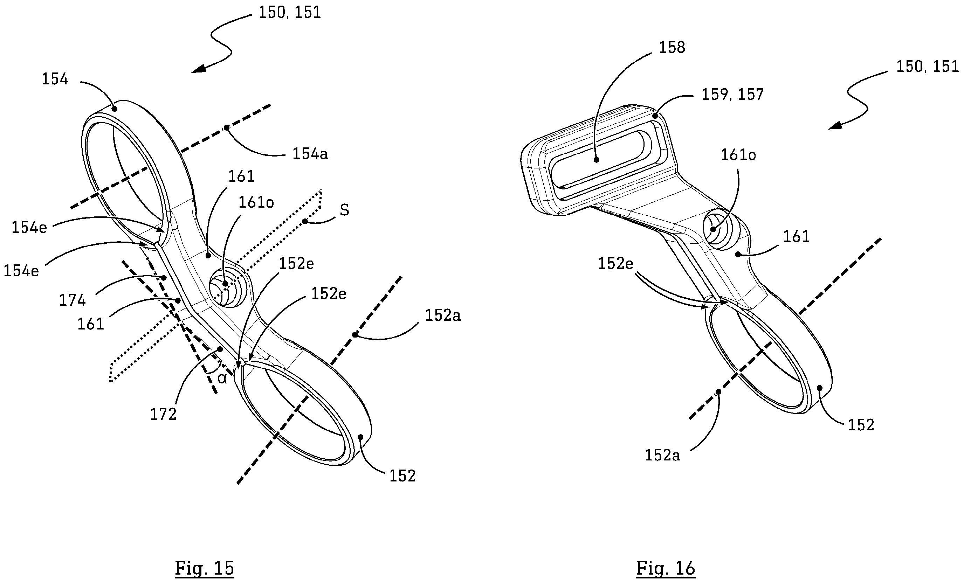

Die verwendete Befestigungseinrichtung 150 des ersten Ausführungsbeispiels ist dabei separat nochmals in Figur 15 dargestellt. In dieser Darstellung ist gut zu erkennen, dass die als brillenartige Doppelschelle 151 mit zwei gleichartigen Klemmschellen 152 154 ausgeführte Befestigungseinrichtung 150 als zusammenhängendes, einstückiges Bauteil ausgebildet ist, beispielsweise aus einem Kunststoffmaterial im Spritzgussverfahren. Das Design dieser auch als "Infinity Clamp" (ICL) bezeichneten Doppelschelle macht im Sinne des 'Form follows Function'-Prinzips intuitiv die verschiedenen Verstellmöglichkeiten sowie deren einfache Bedienung mit nur einer Befestigungsschraube klar.

Jede Klemmschelle 152, 154 weist zwei Enden 152e, 154e auf, die im nicht angezogenen Zustand der Klemmschellen geringfügig voneinander beabstandet sind.

An ihren Enden 152e, 154e sind die zwei Klemmschellen 152, 154 durch zwei im Wesentlichen gleichartige Verbindungsstege 161 miteinander verbunden, die mittig von je einer Durchgangsöffnung 161o durchsetzt sind, wobei in einer der Durchgangsöffnungen 161o ein Innengewinde vorgesehen sein kann. Alternativ kann eine separate Mutter verwendet werden.

Durch Einsetzen einer Schraube 156 in die beiden fluchtenden Durchgangsöffnungen 161o und anschließendes Festziehen der Schraube 156, werden die Verbindungsstege 161 und damit die beiden Enden 154e 152e jeder Klemmschelle 152, 154 aufeinander zubewegt und so werden die Klemmschellen festgezogen.

Um die Fahrrad-Betätigungseinrichtung 100 mit der Befestigungseinrichtung 150 zu positionieren, ist es nur erforderlich, die Klemmschraube 156 mit einer Hand zu lösen, die Betätigungseinrichtung mit der anderen Hand gemäß den vorgesehenen Freiheitsgraden an die gewünschte Position zu bringen und die Klemmschraube 156 dann wieder anzuziehen, um die Position der Betätigungseinrichtung 100 zu fixieren..

Die Schellenachsen 152a und 154a der beiden Klemmschellen 152 und 154 können um einen Winkel α gegeneinander geneigt sein, der vorzugsweise zwischen 15° und 30°, besonders bevorzugt bei etwa 10° liegt, um die Betätigungseinrichtung in eine ergonomisch günstige Position zu bringen. Der Winkel zwischen den Schellenachsen ist in Figur 15 aus Platzgründen nicht direkt dargestellt, ist jedoch identisch zu dem Winkel α, unter dem die Abschnitte 172, 174 der Verbindungsstege 161 zu beiden Seiten der Durchgangsöffnung 161o gegeneinander geneigt sind.

Die Doppelschelle 151 ist spiegelsymmetrisch bezüglich einer Symmetrie-Ebene S aufgebaut, die in Fig. 15 angedeutet ist, zwischen den Klemmschellen 152 und 154 hindurch verläuft und eine Mittelachse der Öffnung 161o enthält. Zudem kann die Doppelschelle auch spiegelsymmetrisch bezüglich einer weiteren Symmetriebene sein, welche durch die beiden Schellenachsen 152a, 154a aufgespannt wird.

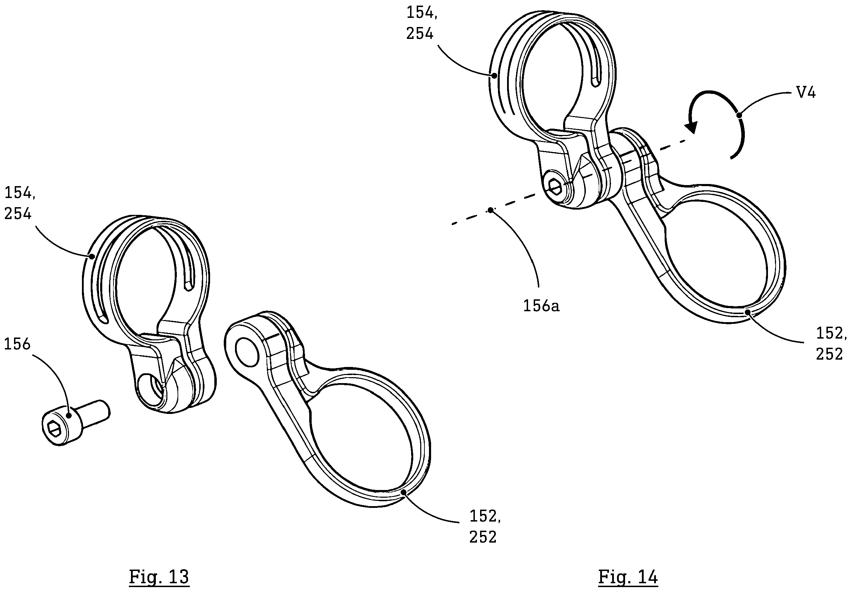

Ist die Befestigungseinrichtung 150 nicht als einstückiges Doppelschellen-Bauteil sondern aus zwei separaten Klemmschellen-Bauteilen 252, 254 aufgebaut, wie in den Figuren 13 und 14 gezeigt ist, kann auch der Winkel α durch Verdrehen der Klemmschellen-Bauteile 252, 254 gegeneinander um die Achse 156a der gemeinsamen Schraube 156 nach den Wünschen und Vorlieben des Benutzers eingestellt werden. Damit ergibt sich ein zusätzlicher, vierter Freiheitsgrad V4 durch Einstellung des Neigungswinkels zwischen den Schellenachsen. In den Figuren 13 und 14 ist zwar Form und Durchmesser der Klemmschellen-Bauteile 252, 254 identisch, es gibt aber geringfügige Gestaltungsunterschiede, so ist beispielsweise nur in dem Bauteil 254 ein Schlitz in der Schelle vorgesehen. Anders als dargestellt, könnten die Klemmschellen-Bauteile 252, 254 auch identisch sein, dann ist nur ein einziges Teil herzustellen für die gesamte Schelle und für beide Lenkerseiten.

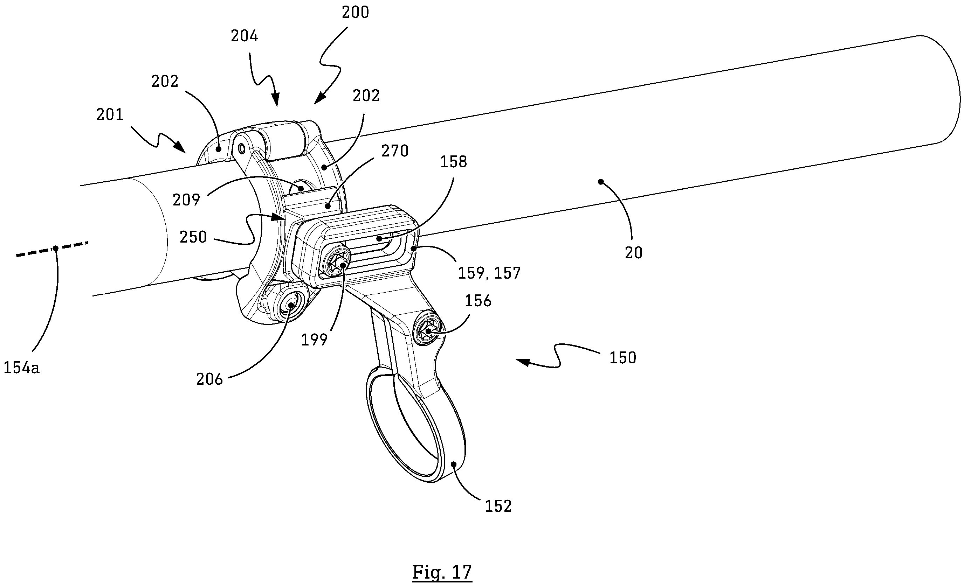

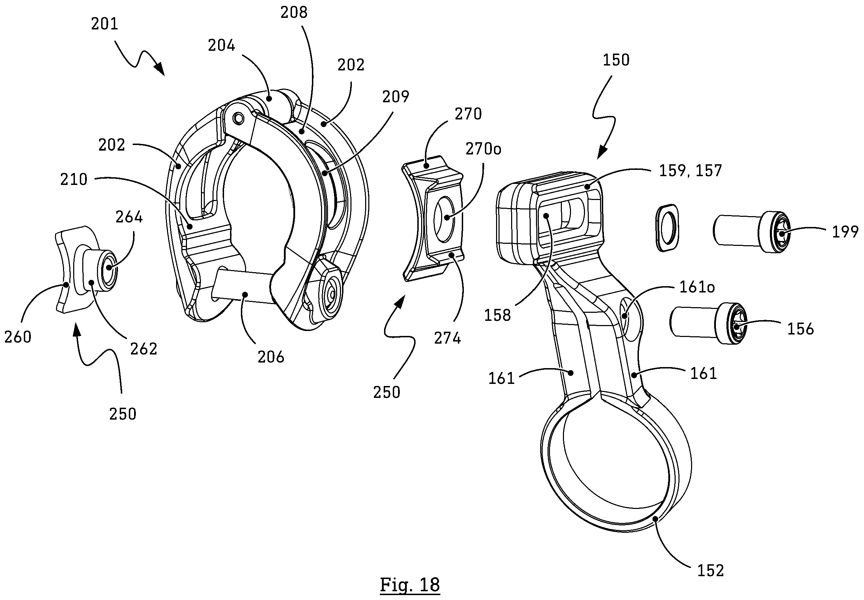

Um die erfindungsgemäße Fahrrad-Betätigungseinrichtung mit dem Befestigungsvorsprung auch an einer auf dem Markt verbreiteten Montageeinrichtung verwenden zu können, wie sie aus der US 2011253863 A1 bekannt ist, kann alternativ vorgesehen sein, dass die hier auch als "MMX-Brücke" bezeichnete Befestigungseinrichtung 150 anstelle der zweiten Klemmschelle 154 einen Befestigungsabschnitt 159 mit einem Langloch 158 umfasst, wie in Figur 16 gezeigt ist. Genauer laufen die beiden von Enden 152e der Klemmschelle 152 ausgehenden Verbindungsstege 161 jenseits der beiden fluchtenden Durchgangsöffnungen 161o zu einem einstückig ausgebildeten Befestigungsabschnitt 159 zusammen, wobei die Öffnungsebenen des Langlochs 158 und der Klemmschelle 152 ungefähr orthogonal zueinander orientiert sind. Der Befestigungsabschnitt 159 bildet eine Verbindungsschnittstelle 157 für die separate Lenkerschelle 201, die in den Figuren 17 und 18 dargestellt ist. Anders als dargestellt, können die Verbindungsstege zum Beispiel aus Fertigungsgründen auch nicht zusammenlaufen sondern jeweils in einem Befestigungsabschnitt enden, wobei die beiden vorzugsweise gleich ausgebildeten Befestigungsabschnitte dann durch Anziehen der Klemmschraube gegeneinander gedrückt werden.

Fig. 17 zeigt die am Lenker 20 eines Fahrrads vermittels von Teilen der bekannten Montageeinrichtung fixierte Befestigungseinrichtung 150 aus Fig. 16, und Figur 18 zeigt die Komponenten der Montageeinrichtung 200 und der Befestigungseinrichtung 150 aus Figur 17 in einer Explosionsdarstellung. Wie Fig. 17 zeigt, erstreckt sich das Langloch 158 in eine Richtung, die ungefähr parallel zur Lenkerachse verläuft, wenn die Befestigungseinrichtung 150 vermittels der Montageeinrichtung 200 am Lenker 20 eines Fahrrads angebracht ist.

Die Montageeinrichtung 200 umfasst eine separate Lenkerschelle 201 mit zwei Klemmschellen-Abschnitten 202, die jeweils an einem Ende in einem Scharnier 204 schwenkbar miteinander gekoppelt sind, und deren andere Enden durch Anziehen eines Befestigungsmittels 206 aufeinander zu bewegt werden können, um die Lenkerschelle 201 an einem Lenker 20 zu fixieren. Das Befestigungsmittel 206 kann eine Aufnahmeschnittstelle für einen Bremshebel bieten.

An der radialen Innenfläche jedes Klemmschellen-Abschnitts 202 ist jeweils eine innere Führungsschiene 208 ausgebildet, an der radialen Außenfläche eine äußere Führungsschiene 210, wobei die Führungsschienen 208, 210 jeweils von einem Führungsschlitz 209 durchsetzt sind.

Weiterhin umfasst die bekannte Montageeinrichtung 200 eine Halterung 250, die dazu ausgebildet ist, an der Lenkerschelle 201 montiert zu werden, und die in Umfangsrichtung entlang den Führungsschienen 208, 210 verstellbar ist. Die Halterung 250 umfasst ein Innenteil 260 und ein Außenteil 270 die jeweils von innen bzw. außen in Kontakt mit der inneren Führungsschiene 208 bzw. äußeren Führungsschiene 210 eines Klemmschellen-Abschnitts 202 gebracht werden, wobei ein am Innenteil 260 vorgesehener Befestigungszylinder 262 den Führungsschlitz 209 durchsetzt und mit einer im Außenteil 270 vorgesehene Durchgangsöffnung 270o fluchtet. Die'auch als "Matchmaker-Schelle" bezeichnete Lenkerschelle 201 und das Innenteil 260 der Halterung 250 stimmen dabei mit den Komponenten der aus US 2011253863 A1 bekannten Montageeinrichtung überein, lediglich das auch als "Twist-Lock-Prisma" bezeichnete Außenteil 270 der Halterung 250 ist auf die Verwendung mit der Befestigungseinrichtung 150 abgestimmt.

Um die Befestigungseinrichtung 150 an der Montageeinrichtung 200 zu fixieren, wird eine Befestigungsschraube 199 durch das Langloch 158 und die Öffnung 270o in ein Innengewinde 264 im Befestigungszylinder 262 eingeschraubt. Eine Drehung der Befestigungseinrichtung 150 um die Achse der Befestigungsschraube 199 wird durch Zusammenwirken von an dem Außenteil 270 der zweiten Halterung 270 vorgesehenen Drehsicherungsstrukturen 274 mit der Außenkontur des Befestigungsabschnitts 159 verhindert. Das Außenteil 270 reduziert also die Anzahl der theoretisch möglichen sechs Verstellungs-Freiheitsgrade auf die gewünschten zwei Freiheitsgrade, nämlich Rotation um die Lenkerachse 154a und Translation entlang der Lenkerachse 154a, vgl. Verstell-Freiheitsgrade V1 und V2 in Fig. 12. Hierdurch ergibt sich nach dem Öffnen der Schraube 199 eine einfache und schnelle, klar definierte Verstellmöglichkeit für den Benutzer.

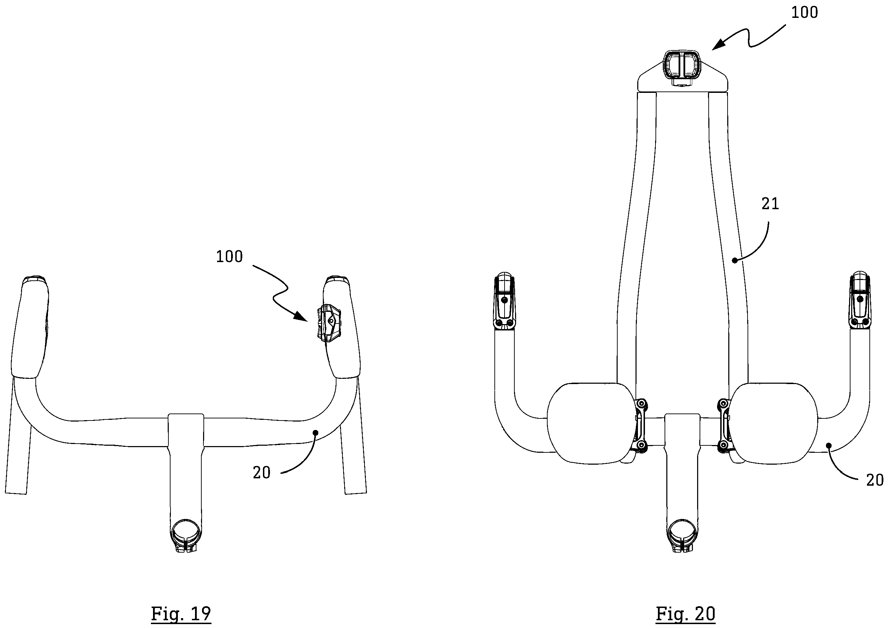

Die Figuren 19 und 20 illustrieren schematisch den Einsatz der erfindungsgemäßen Fahrrad-Betätigungseinrichtung 100 am Lenker 20 eines Rennrads (Fig. 19) bzw. am Lenker-Aufsatz 21 eines Triathlon-Fahrrads (Fig. 20).

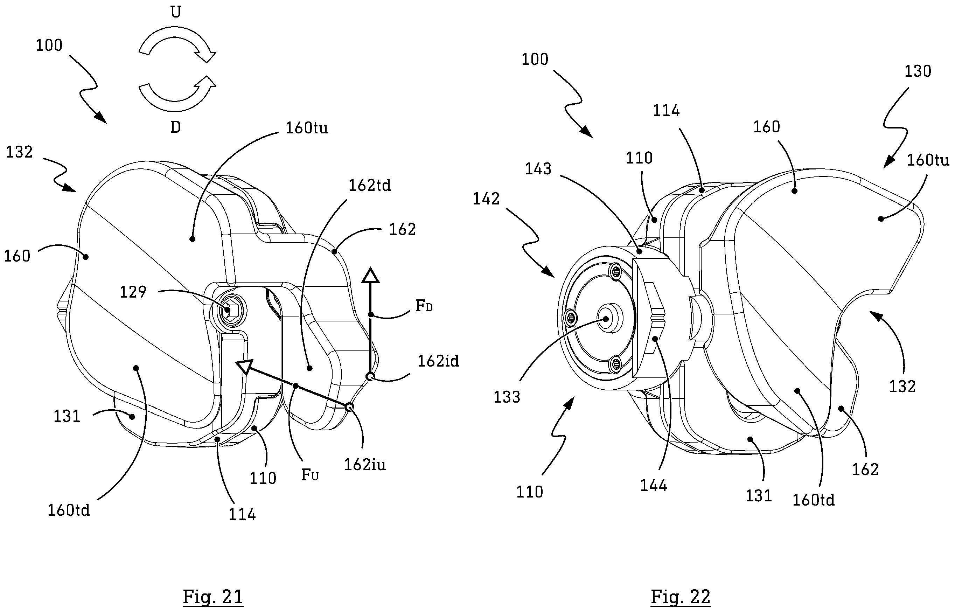

Schließlich zeigen die Figuren 21 bis 24, 25 bis 26, 27 bis 28 und 29 bis 37 noch sechs weitere Ausführungsbeispiele erfindungsgemäßer Fahrrad-Betätigungseinrichtungen 100, die sich nur in der Gestaltung des Mechanikmoduls 130 von dem der Figuren 2 bis 4 unterscheiden, während das Elektronikmodul 110 in allen Ausführungsformen weitgehend oder vollständig identisch ist.

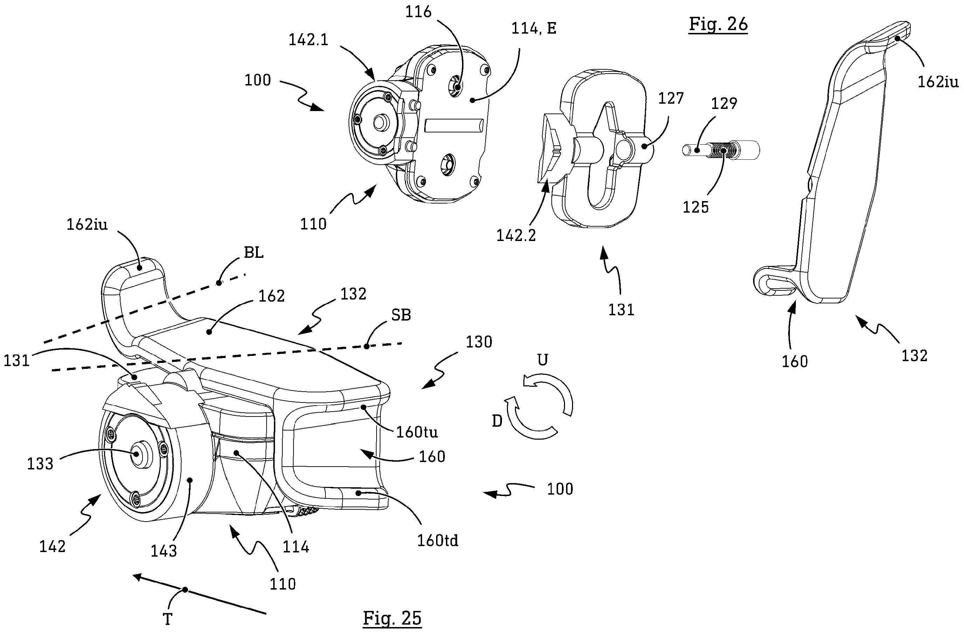

In den Ausführungsbeispielen gemäß Fig. 21 bis 26 ist das Betätigungsbauteil 132 einteilig ausgeführt und weist verschiedene Betätigungsabschnitte für den Daumen und den Zeigefinger der (im dargestellten Beispiel rechten) Hand eines Fahrers auf. Die Schwenkrichtungen des Betätigungsbauteils 132 zum Hochschalten ("upshift" in einen schnelleren Gang oder "Outboard"-Schalten auf ein kleineres Ritzel an einer Ritzelkassette) bzw. Herunterschalten ("downshift" in einen langsameren Gang oder "Inboard"-Schalten auf ein größeres Ritzel an einer Ritzelkassette) eines angesteuerten Schaltwerks 32 sind in den Figuren 21 und 25 jeweils durch Pfeile U und D angedeutet.

Die Zuordnung der Schwenkrichtungen zu den Richtungen des Schaltvorgangs ist in allen Ausführungsbeispielen aber nur beispielhaft angegeben und könnte auch umgekehrt sein. Auch ist es möglich, die Zuordnung der Schwenkrichtungen zu den Richtungen des Schaltvorgangs in dem Elektronikmodul 100 zum Beispiel Software-gesteuert einzustellen oder zu ändern, was auch über eine geeignete App, insbesondere für ein Smartphone, erfolgen kann, welche insbesondere drahtlos mit dem Elektronikmodul 100 verbunden werden kann.

Im Beispiel der Figuren 21 bis 24 weist das Betätigungsbauteil 132 einen Hauptteil 160 in Form einer leicht gewölbten Betätigungswippe für den Daumen den Fahrers auf, der unmittelbar auf bzw. oberhalb der Montageplatte 114 des Elektronikmoduls 110 angeordnet ist. Der Hauptteil 160 weist zwei Betätigungsabschnitte 160tu und 160td, bei deren Druckbetätigung durch den Daumen ("thumb") ein Hoch- bzw. Herunterschalten eines angesteuerten Schaltwerks ausgelöst werden kann.

Weiterhin weist das Betätigungsbauteil 132 der Figuren 21 bis 24 einen Ausleger 162 auf, der im zusammengebauten Zustand der Betätigungseinrichtung 100 seitlich von dem Elektronikmodul 110 und etwas unterhalb der Deckplatte 114 angeordnet ist.

Auch der Ausleger weist einen zusätzlichen Betätigungsabschnitt 162td zum Herunterschalten durch den Daumen sowie zwei Betätigungsabschnitte 162iu und 162id zum Hoch- bzw. Herunterschalten durch den Zeigefinger ("index") auf, wobei der Betätigungsabschnitt 162iu durch Drücken, der Betätigungsabschnitt 162id durch Ziehen betätigt wird. Kraftangriffspunkt und Kraftrichtung für die Betätigungsabschnitte 162iu und 162id sind in Fig. 21 durch Pfeile Fu und F_{D} angedeutet.

In den Explosionsdarstellungen der Figuren 23 und 24 sind insbesondere die Raststrukturen 130r am Rahmenbauteil 131 des Mechanikmoduls 130 sowie die Raststrukturen 110r am Elektronikmodul erkennbar, die dafür sorgen, dass das Mechanikmodul 130 einfach auf das Elektronikmodul 110 aufgeclipst werden kann.

Weiterhin ist zu erkennen, dass die schwenkbare Lagerung des Betätigungsbauteils 132 am Rahmenbauteil 131 durch eine Schraube 129 mit einem zentralen Gewindeabschnitt 125 erfolgt, die in das Betätigungsbauteil 132 eingeschraubt wird und deren Enden in Achsaufnahmen 127 des Rahmenbauteils 131 drehbar aufgenommen sind.

Im Ausführungsbeispiel der Figuren 25 und 26 ist der Hauptteil 160 des Betätigungsbauteils 132 nicht auf sondern bezüglich einer Fahrtrichtung T vom Fahrer aus gesehen hinter dem Elektronikmodul 110 angeordnet und weist ebenfalls Betätigungsabschnitte 160tu und 160td zum Hoch- und Herunterschalten durch den (rechten) Daumen des Fahrers auf.

Weiterhin ist ebenfalls ein einstückig mit dem Hauptteil 160 ausgebildeter Ausleger 162 vorgesehen, allerdings nicht seitlich von sondern hinter und etwas oberhalb von dem Elektronikmodul 110, wie in Figur 25 illustriert ist. Form und Position des Auslegers 162 sind dazu angepasst, die FahrradBetätigungseinrichtung 100 so am Lenker 20 eines Fahrrads zu positionieren, dass Lenkstange und Bremshebel etwa entlang der in Fig. 25 mit SB ("steering bar") bzw. BL ("brake lever") bezeichneten Linien verlaufen. Dabei wird die Betätigungseinrichtung vorzugsweise so montiert, dass die Schnittstellen-Ebene des Elektronikmoduls 110 annähernd horizontal verläuft.

Um Platz für den Bremshebel zu bieten, weist der Ausleger 162 am distalen Ende eine geeignete Wölbung auf. Der Betätigungsabschnitt 162iu des Auslegers 162 zum Hochschalten durch den Zeigefinger ist damit bezüglich einer Fahrtrichtung T vom Fahrer aus gesehen vor dem Bremshebel positioniert, so dass der Bremshebel zum Hochschalten nicht losgelassen werden muss, wenn der Zeigefinger von oben auf den Betätigungsabschnitt 162iu drückt. Insbesondere muss der Zeigefinger nicht zwischen Lenker und Bremse bewegt werden. Wie zuvor erwähnt, könnte die Zuordnung der Schwenkrichtungen des Betätigungsbauteils 132 zu den Schaltrichtungen des angesteuerten Schaltwerks jedoch auch umgekehrt oder vom Benutzer einstellbar sein.

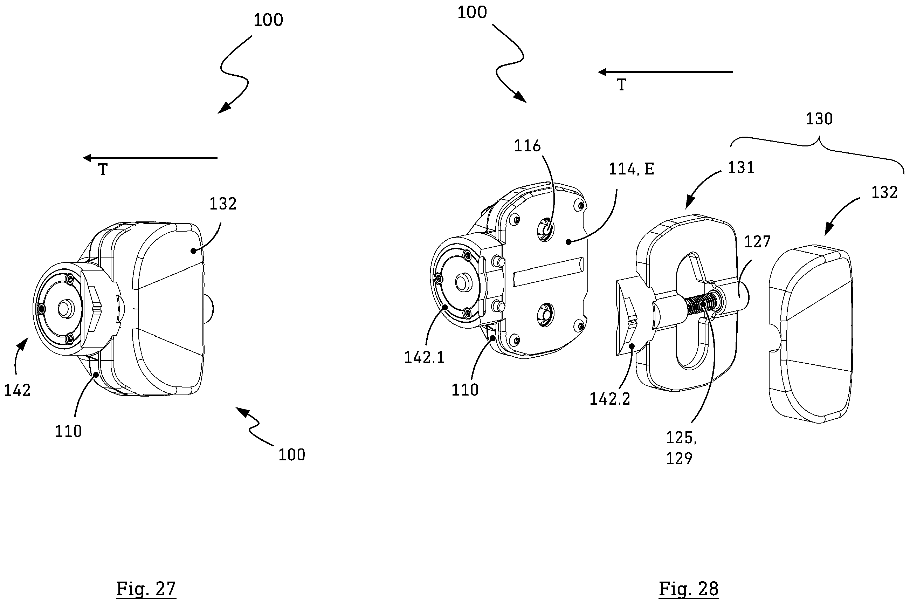

Die Figuren 27 und 28 zeigen eine Betätigungseinrichtung 100 mit einem besonders einfach und damit kostengünstig als flachem Wippschalter ausgebildeten Betätigungsbauteil 132 und ermöglichen insbesondere einen Blick auf die schwenkbare Lagerung des Betätigungsbauteils 132, die vorstehend im Zusammenhang mit dem Ausführungsbeispiel der Figuren 23 und 24 beschrieben wurde.

Bei einem weiteren, in den Figuren nicht dargestellten Ausführungsbeispiel wird ein Elektronikmodul 110 ähnlich oder identisch wie bei den vorstehend und nachfolgend beschriebenen Ausführungsformen mit einem zumindest teilweise aus einem nachgiebigen Werkstoff, beispielsweise aus Elastomer bestehenden Mechanikmodul 130 gekoppelt. Auf diese Weise lässt sich ein kostengünstig herstellbares Betätigungselement 100 bereitstellen, bei dem die Betätigung der Taster bzw. Schalter 116 des Elektronikmoduls 110 direkt über den aus Elastomer bestehenden Teil des Mechanikmoduls 130 erfolgt, welcher sich anschließend durch elastische Rückstellkräfte des Elastomerwerkstoff selbsttätig wieder in seine Ausgangsform zurück verformt. Ein so gestaltetes Betätigungselement 10 kann zudem auch besonders einfach schmutz- und wasserdicht ausgebildet werden. Hierbei kann das Mechanikmodul 130 insbesondere mittels Mehrkomponenten-Spritzguss aus einem starren Rahmenbauteil 113 und einem elastisch nachgiebigen Betätigungsbauteil 132 einstückig ausgebildet sein.

Es wird darauf hingewiesen, dass in allen Ausführungsbeispielen alternativ auch das Betätigungsbauteil schwenkbar an einer entsprechend modifizierten Schraube gelagert sein könnte, die in diesem Fall mit dem Rahmenbauteil verschraubt sein könnte

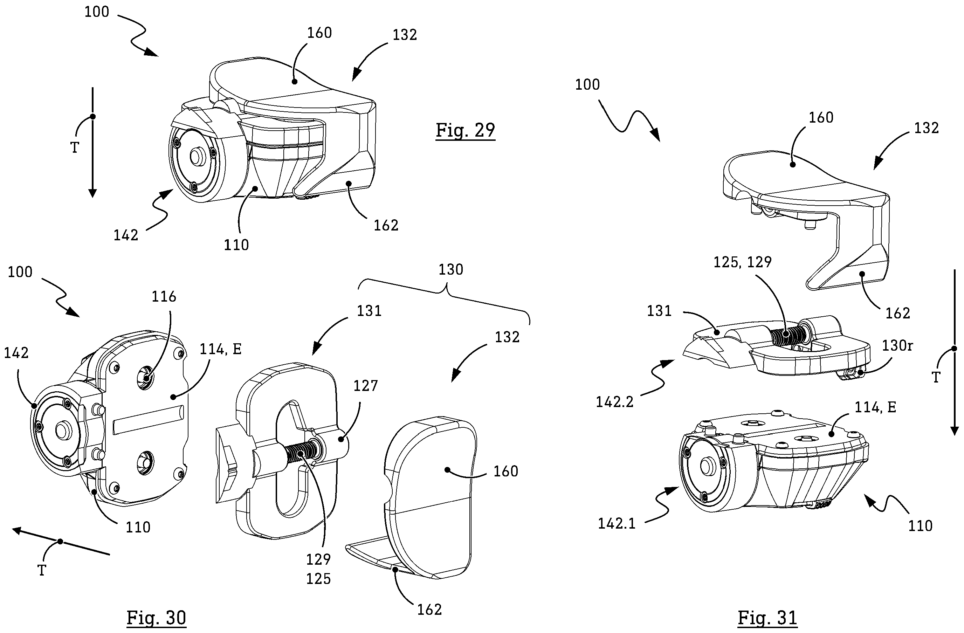

Die Figuren 29 bis 31 zeigen eine Betätigungseinrichtung 100 mit einem Betätigungsbauteil 132, das einen flachen Hauptteil 162 und einen Ausleger 162 aufweist, der bezüglich einer Fahrtrichtung T vor dem Elektronikmodul 110 angeordnet ist und beispielsweise mit dem Zeigefinger bedient werden kann, während der Hauptteil 162 mit dem Daumen bedient wird.

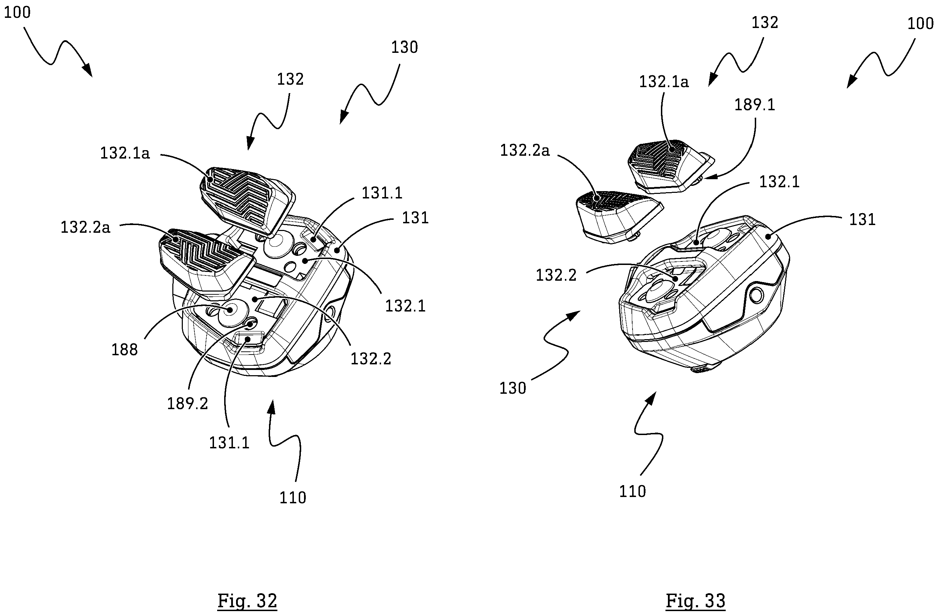

Figuren 32 und 33 zeigen ein sechstes Ausführungsbeispiel für eine modulare Fahrrad-Betätigungseinrichtung 100. Bei dieser Ausführungsform ist ein Elektronikmodul 110, ähnlich oder identisch wie bei den vorstehend weiter oben beschriebenen Ausführungsformen, ebenfalls wieder mit einem Mechanikmodul 130 kombiniert, wobei das Mechanikmodul 130 bei dieser Ausführungsform wieder ein Rahmenbauteil 131 sowie ein Betätigungsbauteil 132 umfasst.

Hier sind jedoch auf den Schaltelementen 132.1/132.2 des Betätigungsbauteils 132, von dem Betätigungsbauteil 132 trennbare, separate Betätigungskappen 132.1a, 132.2a angeordnet. Die Betätigungskappen 132.1 a, 132.2a lassen sich mittels darin angeordneter Rastvorsprünge 189.1 in komplementären Rastausnehmungen 189.2 der Schaltelemente 132.1/132.2 einrastend befestigen. Auf diese Weise können dem Benutzer bzw. Kunden unterschiedliche, auf seine ergonomischen Anforderungen hin angepasste Betätigungskappen 132.1 a, 132.2a zur Verfügung gestellt werden, die vom Nutzer selbst ausgetauscht werden können. Zum Austausch werden die Betätigungskappen 132.1a, 132.2a mit einem geeigneten Werkzeug, beispielsweise mit einem Schraubendreher, im Bereich von Demontageausnehmungen 131.1 hintergriffen und abgehebelt.

Die in Fig. 32 und 33 sichtbaren Dom-artigen Erhebungen 188 auf den Schaltelementen 132.1/132.2 dienen der Aufnahme der darunter angeordneten, in Fig. 32 und 33 nicht sichtbaren Taster bzw. Schalter 116 des Elektronikmoduls 110 sowie dort etwa angeordneter Schraubenfedern zur Rückstellung der Schaltelemente 132.1/132.2 nach der Betätigung.

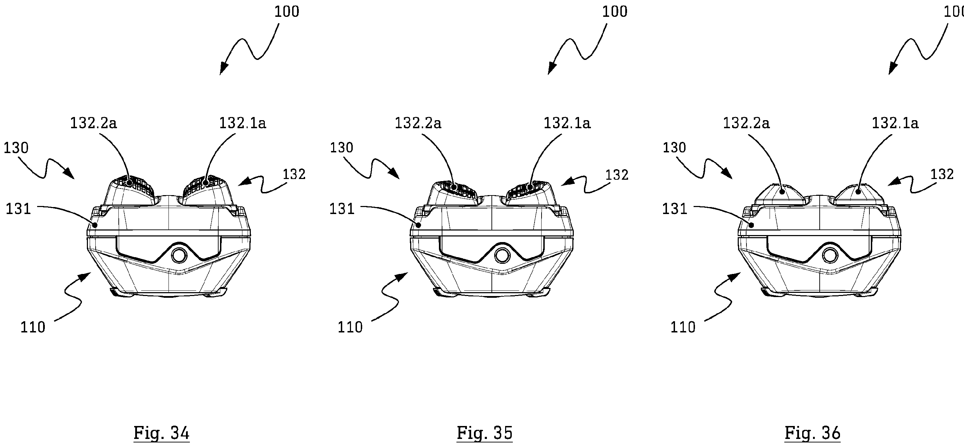

Die Figuren 34 bis 36 zeigen Varianten des Ausführungsbeispiels gemäß Figuren 32 und 33. Man erkennt, neben dem unveränderten Elektronikmodul 110 und dem ebenfalls unveränderten Rahmenbauteil 131, die unterschiedliche Höhe und Form der Betätigungskappen 132.1a, 132.2a, die vom Nutzer entsprechend seiner Vorlieben ausgetauscht werden können.

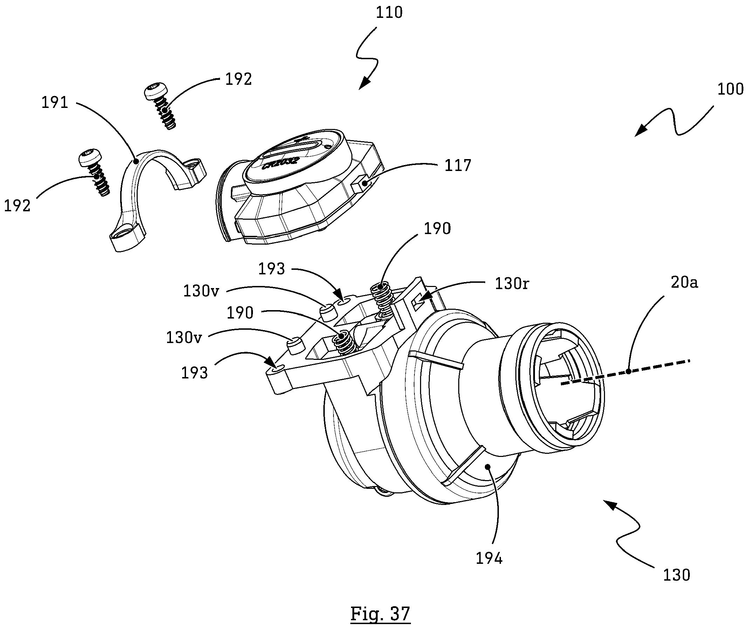

Fig. 37 schließlich zeigt die Explosionsdarstellung einer modularen Fahrrad-Betätigungseinrichtung nach einer siebten Ausführungsform. Bei dieser Ausführungsform ist wiederum ein Elektronikmodul 110, ähnlich oder identisch wie bei den weiter oben beschriebenen Ausführungsformen vorhanden, welches hier jedoch mit einem als Drehgriffschalter ausgebildeten Mechanikmodul 130 kombiniert ist, ähnlich wie in der schematischen Moduldarstellung in Fig. 11 dargestellt.

Das Mechanikmodul 130 umfasst bei dieser Ausführungsform einen um die Lenkerachse 20a rotierbaren Drehgriff 194, welcher bei Rotationsbetätigung durch den Nutzer, beispielsweise mittels (nicht dargestellter) schneckenartig ausgeformter Nocken sowie über Betätigungsfedern 190, auf die Taster bzw. Schalter des Elektronikmoduls 110 wirkt und diese somit betätigt. Durch solche schneckenartig geformte Nocken wird eine Betätigungsmöglichkeit um einen größeren Winkelbetrag erreicht als es bei dem schematischen Beispiel gemäß Fig. 11 der Fall ist.

Die Nocken des Drehgriff-Mechanikmoduls 130 dieser Ausführungsform können beispielsweise auch radial abgestuft sein, um entsprechend mehrere Schaltstufen pro Taster bzw. Schalter des Elektronikmoduls 110 auslösen zu können, wobei die Taster bzw. Schalter des Elektronikmoduls 110 in diesem Fall entsprechend ebenfalls mehrstufig ausgebildet sind.

Die mechanische Verbindung zwischen dem Drehgriff-Mechanikmodul 130 und dem Elektronikmodul 110 erfolgt hier über einen Befestigungsbügel 191, welcher mittels Befestigungsschrauben 192, die in Befestigungsbohrungen 193 am Mechanikmodul 130 eingreifen, mit dem Mechanikmodul 130 verschraubt wird. Hierbei greift auch der Rastvorsprung 117 des Elektronikmoduls 110 in die Rastausnehmung 130r am Mechanikmodul 130 ein. Zusätzlich greifen am Mechanikmodul angeordnete Zentriervorsprünge 130v in entsprechende Zentrierausnehmungen 110z (vgl. Fig. 6) am Elektronikmodul 110 ein.

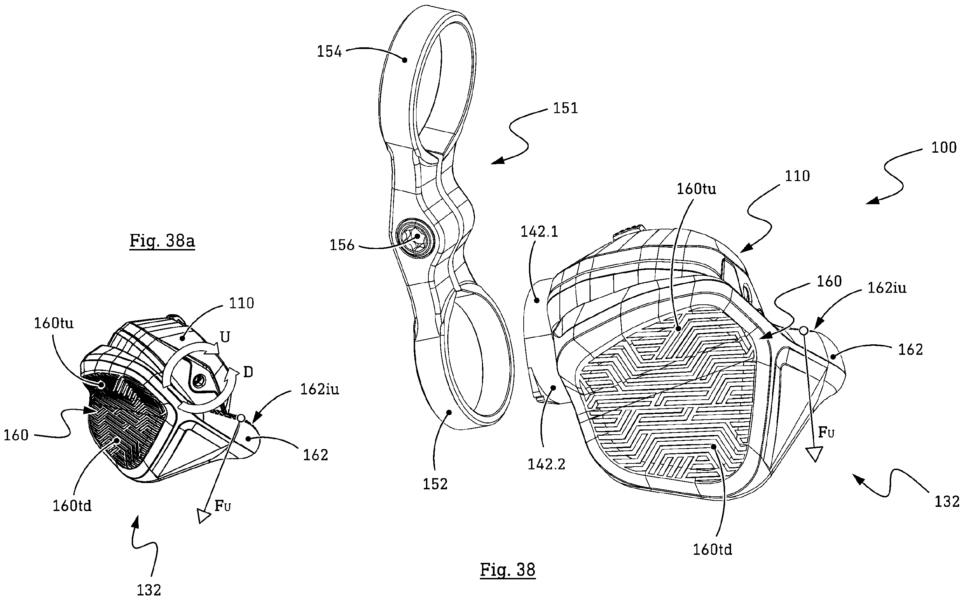

Die Betätigungseinrichtung 100 gemäß Fig. 38 bis 41 ist konstruktiv eine abgewandelte Mischform aus den Ausführungsformen mit Schaltelement bzw. Schaltwippe 132.1, 132.2 gemäß Fig. 2 bis 4 und 32 bis 36 und aus den Ausführungsformen mit Direktbetätigung ohne zusätzliche Schaltwippe gemäß Fig. 10 und Fig. 21 bis 31.

Dabei zeigt Fig. 38 eine Fahrrad-Betätigungseinrichtung 100 nach einem achten Ausführungsbeispiel, welche mit einer Befestigungseinrichtung 151 ähnlich der in Fig. 2, 12 und 15 dargestellten kombinierbar ist, und in Fig. 38 unmittelbar vor der Zusammenfügung mit dieser Befestigungseinrichtung 151 dargestellt ist.

Die achte Ausführungsform gemäß Fig. 38 bis 41 übernimmt von den Ausführungsformen mit Schaltwippe 132.1, 132.2 gemäß Fig. 2 bis 4 und 32 bis 36 dabei zunächst das Vorhandensein einer Schaltwippe 132.1, 132.2, wobei die Schaltwippe 132.1, 132.2 bei der achten Ausführungsform, anders als bei den Ausführungsformen gemäß Fig. 2 bis 4 und 32 bis 36, nicht zweigeteilt ist und damit nicht, wie bei den letztgenannten Ausführungsformen, die wahlweise sowohl unabhängige als auch gleichzeitige Betätigung der beiden Schalter bzw. Taster 116 erlaubt. Vielmehr ist die Schaltwippe 132.1, 132.2 bei der achten Ausführungsform einteilig ausgebildet und erlaubt damit eine Entweder-Oder-Betätigung der beiden Taster 116 durch ein Betätigungsbauteil 132.

Weiterhin übernimmt die achte Ausführungsform gemäß Fig. 38 bis 41 von den Ausführungsformen mit Schaltwippe gemäß Fig. 2 bis 4 und 32 bis 36 das Rahmenbauteil 131, wobei unter den Gesichtspunkten der Modulbauweise, Kombinationsfreiheit und Teilereduktion insbesondere eine zumindest bezüglich der mechanischen Schnittstellen identische Übernahme des Rahmenbauteils 131 in Betracht kommt und vorgesehen ist.

Von den Ausführungsformen mit Direktbetätigung ohne zusätzliche Schaltwippe 132.1, 132.2 gemäß Fig. 10 und Fig. 21 bis 31 übernimmt die achte Ausführungsform gemäß Fig. 38 bis 41 andererseits, wie bereits vorstehend erwähnt, die Entweder-Oder-Betätigung der beiden Schalter bzw. Taster 116. Dieser Betätigungsart entsprechend wird von den Ausführungsformen gemäß Fig. 10 und Fig. 21 bis 31 auch das im Wesentlichen einstückig ausgeführte Betätigungsbauteil 132 übernommen, jedoch bevorzugt mit anderer Formgebung.

Ergonomisch ist das Betätigungsbauteil 132 gemäß Fig. 38 bis 41 jedoch mit den Betätigungsbauteilen 132 der Ausführungsbeispiele gemäß Fig. 21 bis 26 und 30 bis 31 verwandt. Mit den Betätigungsbauteilen 132 der letztgenannten Ausführungsformen verbindet das Betätigungsbauteil 132 gemäß dem achten Ausführungsbeispiel nach Fig. 38 bis 41 das Vorhandensein mehrerer Betätigungsabschnitte 160td, 160tu, 162iu, welche sich auf einen Betätigungs-Hauptteil 160 und einen Betätigungs-Ausleger 162 verteilen.

Wie Fig. 38 insbesondere in Zusammenschau mit Fig. 38a und Fig. 21 entnommen werden kann, ist der Betätigungs-Hauptteil 160 auch bei dem achten Ausführungsbeispiel gemäß Fig. 38 bis 41 wieder zur Betätigung in beiden Schaltrichtungen U und D vorzugsweise mit dem Daumen vorgesehen, während der Betätigungs-Ausleger 162 bei dem achten Ausführungsbeispiel gemäß Fig. 38 bis 41 vorwiegend zur Betätigung in der Schaltrichtung U vorgesehen ist, indem eine Kraft Fu auf die Betätigungsfläche 162iu des Auslegers 162 aufgebracht wird.

Dabei bedeutet die Schaltrichtung U wie weiter oben wieder ein Hochschalten (also "upshift" in einen schnelleren Gang oder "Outboard"-Schalten auf ein kleineres Ritzel an einer Ritzelkassette), während die Schaltrichtung D für ein Herunterschalten ("downshift" in einen langsameren Gang oder "Inboard"-Schalten auf ein größeres Ritzel an einer Ritzelkassette) mittels eines durch die Betätigungseinrichtung 100 angesteuerten Schaltwerks 32 steht. Unbenommen der Bezeichnung der Schaltrichtungen mit U und D in den Figuren kann vorgesehen sein, dass die Schaltrichtungen vom Nutzer auch umgekehrt eingerichtet werden können.

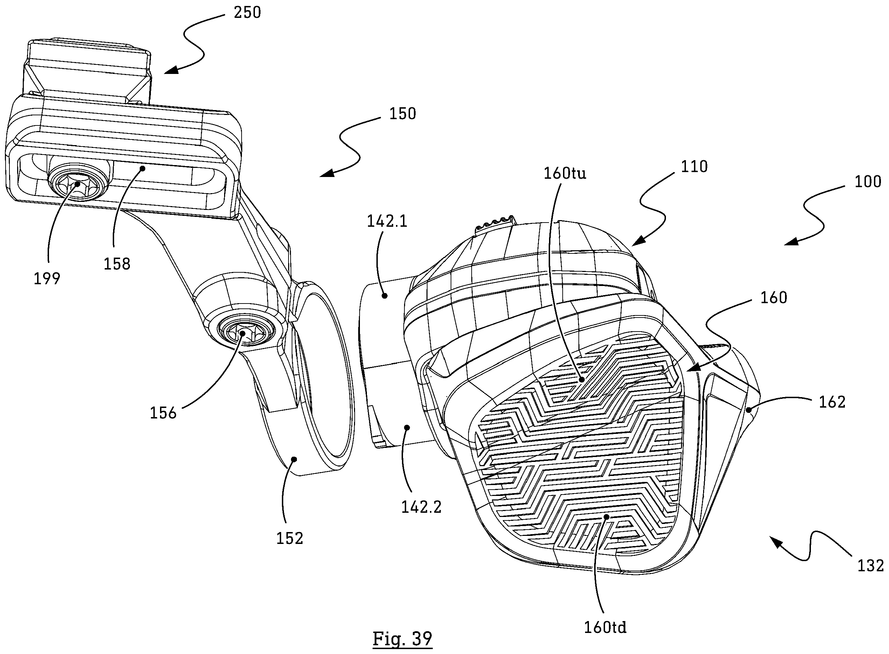

Fig. 39 entspricht weitgehend Fig. 38, mit dem Unterschied, dass die Betätigungseinrichtung 100 in Fig. 39 mit einer Befestigungseinrichtung 150 kombiniert wird, wie diese weiter oben mit Bezug auf Fig. 16 bis 18 ausführlich beschrieben ist.

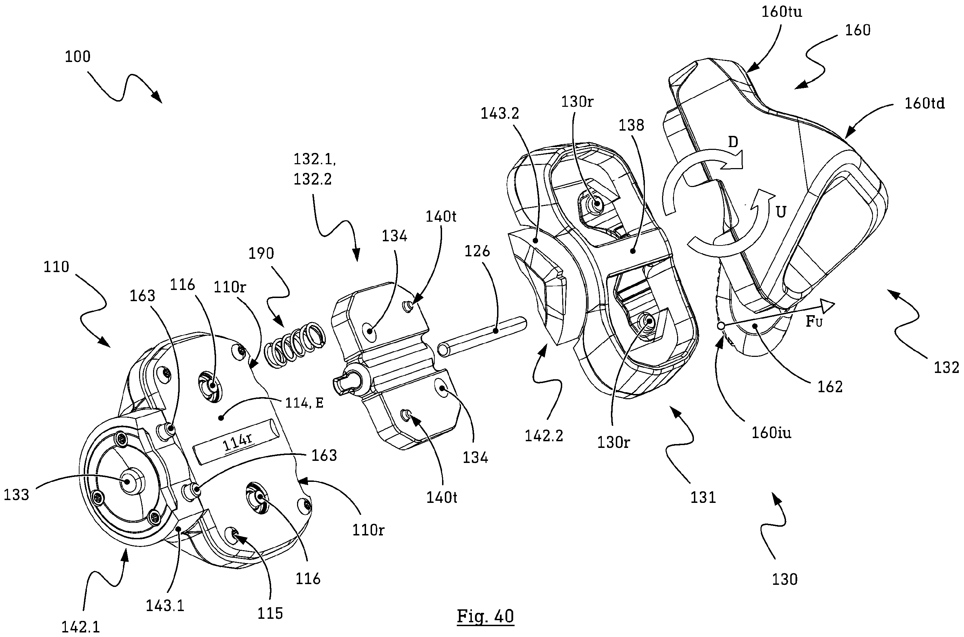

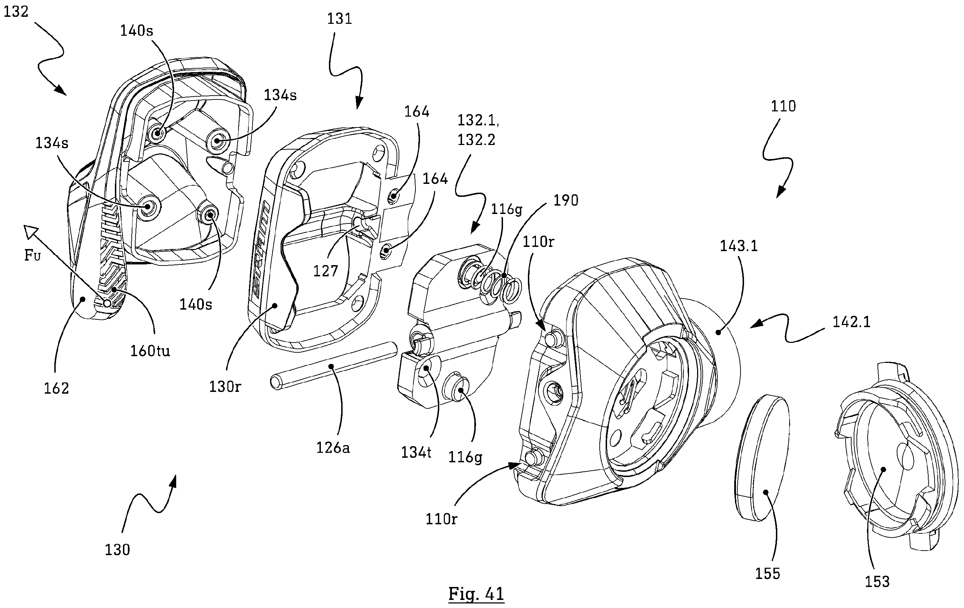

In Fig. 40 und 41 ist weiterhin erkennbar und zu erwähnen eine Betätigungsfeder 190, welche im Betriebszustand der Betätigungseinrichtung 100 für eine rotatorische Vorspannung zwischen der Schaltwippe 132.1, 132.2 gegenüber dem Elektronikmodul 110 und somit für eine weitestgehend spielfreie Betätigungserfahrung durch den Nutzer sorgt. Da die Schaltwippe 132.1, 132.2 bei dem achten Ausführungsbeispiel nach Fig. 38 bis 41 einteilig ausgebildet ist, genügt hier eine Betätigungsfeder 190. Je nach Ausführung und federnder Nachgiebigkeit der Schalter bzw. Taster 116 kann die Betätigungsfeder 190 ggf. auch entfallen.

Ferner erkennbar wird in Fig. 40 und 41 die Schwenkachse 126a, auf welcher die Schaltwippe 132.1, 132.2 schwenkbeweglich gelagert ist. Die Schwenkachse 126 wird beim Zusammenbau der Betätigungseinrichtung 100 in Rastausnehmungen 127 auf der Innenseite des Rahmenbauteils 131 rastend aufgenommen. Die Schaltwippe 132.1, 132.2 wird mit dem Betätigungsbauteil 132 mittels (hier nicht dargestellter) Schrauben verbunden, welche Schraublöcher 134t in der Schaltwippe 132.1, 132.2 durchgreifen und mit Sacklochgewinden 134s verschraubt werden. Hierbei kommen gleichzeitig Stützbolzen 140s auf der Innenseite des Betätigungsbauteils 132 gemäß Fig. 41 mit Stütznocken 140t auf der Oberseite der Schaltwippe 132.1, 132.2 in Kontakt und sorgen für eine statisch bestimmte Verbindung zwischen der Schaltwippe 132.1, 132.2 und dem Betätigungsbauteil 132.

Beim anschließenden Zusammenbau der verschraubten sowie mittels der Achse 126a und der Rastausnehmungen 127 im Rahmenbauteil 131 miteinander verbundenen Einheit aus Betätigungsbauteil 132 mit Schaltwippe 132.1, 132.2 und Rahmenbauteil 131 mit dem Elektronikmodul 110, welcher mittels der Raststrukturen 110r, 163 am Elektronikmodul 110 und der hierzu formkomplementären Raststrukturen 130r 164 am Rahmenbauteil 131 erfolgt, kommen schließlich Betätigungsnocken 116g der Schaltwippe 132.1, 132.2 an den Schaltern bzw. Tastern 116 des Elektronikmoduls zur Anlage.

Die abschließende feste Verbindung von Elektronikmodul 110 und Mechanikmodul 130 für den Fahrbetrieb unter Verwendung der Betätigungseinrichtung 100 erfolgt sodann durch klemmenden Einschluss der Betätigungseinrichtung 100 in die Klemmschelle bzw. Klemmaufnahme 152 der jeweils verwendeten Befestigungseinrichtung 150. Hierbei werden, der der elektronikmodulseitige Befestigungsvorsprung 142.1 und der mechanikmodulseitige Befestigungsvorsprung 142.2 zusammengefügt und aufeinandergepresst und bilden so den Mechanikmodul und Elektronikmodul übergreifenden, gemeinsamen Befestigungsvorsprung 142.

Der modulübergreifende Befestigungsvorsprung 142 stellt sodann wiederum einen beliebigen Drehwinkel zur Verbindung mit der Befestigungseinrichtung 150 und damit den Bewegungsfreiheitsgrad V3 der Verstellbewegung bereit, wie dies insbesondere Fig. 12 zu entnehmen ist. Bezüglich der Einzelheiten zur Ausbildung und Funktion des modulübergreifenden Befestigungsvorsprung 142 wird auf die weiter oben stehenden Ausführungen verwiesen, dort insbesondere mit Bezug auf Fig. 2 bis 8 sowie Fig. 22 und Fig. 25 bis 32.

Weitere in den Figuren 38 bis 41 erkennbare Bauteile bzw. Funktionselemente sind mit denselben Bezugszeichen versehen wie entsprechend analoge Funktionselemente bei den weiter oben beschriebenen Ausführungsbeispielen 1 bis 7, weshalb zu deren näheren Erläuterung auf die jeweiligen dortigen Ausführungen verwiesen wird

Auch wenn die Fahrradbetätigungseinrichtung in den dargestellten Beispielen zum Verstellen bzw. Schalten eines Fahrradschaltwerks genutzt wird, ist die vorliegende Erfindung nicht hierauf beschränkt, und jede beliebige Funktion einer geeigneten Fahrrad-Komponente kann angesteuert werden, etwa die Höhenverstellung einer Sattelstütze, das Ansprechverhalten einer Feder-Dämpfungseinrichtung für eine Federgabel oder für ein Federbein, die Aktivierung eines Scheinwerfers, einer Wegfahrsperre und dgl.

Auch eine drahtlose Fernbedienung von nicht am Fahrrad angeordneten Komponenten, wie beispielsweise Heimtrainern, Garagentor-Öffnern etc. ist möglich. Zur drahtlosen Betätigung dieser diversen Komponenten können proprietäre Drahtlosprotokolle und/oder alternativ bzw. zusätzlich standardisierte oder öffentliche Drahtlosprotokolle wie beispielsweise Bluetooth verwendet werden.

## Patentansprüche

1. Modulare elektronische Fahrrad-Betätigungseinrichtung (100), umfassend:
- ein Elektronikmodul (110) zur elektronischen Ansteuerung mindestens einer Fahrradkomponente (120),
- ein separat von dem Elektronikmodul (110) ausgebildetes und auswechselbar an diesem anbringbares, elektronikfreies Mechanikmodul (130) mit einem Rahmenbauteil (131) und mindestens einem Betätigungsbauteil (132), das beweglich an dem Rahmenbauteil (131) gelagert ist,
**dadurch gekennzeichnet, dass** die Fahrrad-Betätigungseinrichtung (100) einen teilweise an dem Elektronikmodul (100) und teilweise an dem Mechanikmodul (130) ausgebildeten, vorzugsweise zylindrischen Befestigungsvorsprung (142) umfasst, indem eine Außenfläche (143) des Befestigungsvorsprungs (142) aus einem am Elektronikmodul (110) ausgebildeten Außenflächenabschnitt (143.1) und einem am Mechanikmodul (130) ausgebildeten Außenflächenabschnitt (143.2) zusammengesetzt ist.

2. Fahrrad-Betätigungseinrichtung (100) nach Anspruch 1, wobei der Befestigungsvorsprung (142) dazu ausgebildet ist, in einer zum Befestigungsvorsprung (142) formkorrespondierend ausgebildeten Klemmschelle (152) einer Befestigungseinrichtung (150) zur Befestigung der Fahrrad-Betätigungseinrichtung (100) an einem Fahrrad-Lenker (20) fixiert zu werden.

3. Fahrrad-Betätigungseinrichtung (100) nach einem der vorhergehenden Ansprüche, wobei der Befestigungsvorsprung (142) zylindrisch ist und einen Durchmesser zwischen 20 mm und 25 mm aufweist.

4. Fahrrad-Betätigungseinrichtung (100) nach Anspruch 2 oder 3, wobei an einem distalen Ende des Befestigungsvorsprungs (142) ein radial vorstehender Sicherungsabschnitt (144) vorgesehen ist, der vorzugsweise an dem Mechanikmodul (130) ausgebildet ist.

5. Fahrrad-Betätigungseinrichtung (100) nach einem der vorhergehenden Ansprüche, wobei das Mechanikmodul (130) und das Elektronikmodul (110) vermittels einer Anordnung von mehreren im Wesentlichen in einer gleichen Schnittstellen-Ebene (E) am Elektronikmodul angeordneten und parallel zueinander orientierten Schaltern (116) miteinander funktionsmäßig gekoppelt oder koppelbar sind, um durch eine Betätigung des Betätigungsbauteils die Fahrradkomponente (120) anzusteuern.

6. Fahrrad-Betätigungseinrichtung (100) nach Anspruch 1 und Anspruch 5, wobei die Schnittstellen-Ebene (E) die Außenfläche (143) des zylindrischen Befestigungsvorsprungs (142) schneidet und vorzugsweise parallel zu einer Mittelachse (142a) des Befestigungsvorsprungs (142) verläuft.

7. Fahrrad-Betätigungseinrichtung (100) nach einem der vorhergehenden Ansprüche, wobei das Elektronikmodul (110) und das Mechanikmodul (130) dazu ausgebildet sind, werkzeugfrei und lösbar aneinander fixiert zu werden, vorzugsweise vermittels einer Schnappverbindung.

8. Fahrrad-Betätigungseinrichtung (100) nach einem der vorhergehenden Ansprüche, wobei an einer Stirnseite des zylindrischen Befestigungsvorsprungs (142) ein zusätzliches Betätigungselemement (133) vorgesehen ist.

9. Modulares Fahrrad-Betätigungssystem (500), umfassend eine modulare elektronische Fahrrad-Betätigungseinrichtung (100) nach einem der Ansprüche 1 bis 8 und eine Befestigungseinrichtung (150) zur Befestigung der Fahrrad-Betätigungseinrichtung (100) an einem Fahrradlenker (20), umfassend eine Klemmschelle (152), die dazu ausgebildet ist, an dem Befestigungsvorsprung (142) der Fahrrad-Betätigungseinrichtung (100) fixiert zu werden.

10. Modulares Fahrrad-Betätigungssystem (500) nach dem vorhergehenden Anspruch, wobei die Befestigungseinrichtung (150) eine weitere Klemmschelle (154) zur Fixierung der Befestigungseinrichtung (150) am Fahrradlenker (20) umfasst.

11. Modulares Fahrrad-Betätigungssystem (500) nach dem vorhergehenden Anspruch, wobei die Befestigungseinrichtung (150) dazu ausgebildet ist, die beiden Klemmschellen (152,154) durch eine einzige Schraube (156) anzuziehen, und wobei die zwei Klemmschellen (152, 154) einstückig oder als zwei separate Klemmschellen-Bauteile (252, 254) ausgebildet sind.

12. Modulares Fahrrad-Betätigungssystem (500) nach einem der beiden vorhergehenden Ansprüche, wobei jede der beiden Klemmschellen (152, 154) eine Schellenachse (152a, 154a) definiert und die Schellenachsen der beiden Klemmschellen (152, 154) um einen Winkel (α) gegeneinander geneigt sind, der zwischen 15° und 30° beträgt und vorzugsweise etwa 20° beträgt.

13. Modulares Fahrrad-Betätigungssystem (500) nach einem der Ansprüche 9 bis 12, wobei die zwei Klemmschellen (152, 154) einen gleichen Durchmesser aufweisen, und die Befestigungseinrichtung (150) vorzugsweise spiegelsymmetrisch ausgebildet ist bezüglich einer Symmetrie-Ebene (S), die zwischen den zwei Klemmschellen (152, 154) hindurch verläuft.

14. Modulares Fahrrad-Betätigungssystem (500) nach Anspruch 9, wobei die Befestigungseinrichtung (150) eine Verbindungsschnittstelle (157) zur Verbindung des Befestigungseinrichtung (150) mit einer separaten Lenkerschelle (201) umfasst, wobei die Verbindungsschnittstelle (157) ein Langloch (158) oder eine lineare Anordnung mehrerer Befestigungsöffnungen aufweist.

## Claims

1. Modular electronic bicycle actuating device (100), comprising:
- an electronic module (110) for electronically activating at least one bicycle component (120),
- a mechanical module (130) which is formed separately from the electronic module (110) and is attachable exchangeably thereto and which is free of electronics and has a frame component (131) and at least one actuating component (132), which is mounted movably on the frame component (131),
**characterized in that** the bicycle actuating device (100) comprises a preferably cylindrical fastening projection (142) which is formed partially on the electronic module (100) and partially on the mechanical module (130) by an outer surface (143) of the fastening projection (142) being composed of an outer surface portion (143.1) formed on the electronic module (110) and an outer surface portion (143.2) formed on the mechanical module (130).

2. Bicycle actuating device (100) according to Claim 1, wherein the fastening projection (142) is designed to be fixed in a clamping clip (152), which is formed in a manner corresponding to the shape of the fastening projection (142), of a fastening device (150) for fastening the bicycle actuating device (100) to a bicycle handlebar (20).

3. Bicycle actuating device (100) according to either of the preceding claims, wherein the fastening projection (142) is cylindrical and has a diameter of between 20 mm and 25 mm.

4. Bicycle actuating device (100) according to Claim 2 or 3, wherein a radially protruding securing portion (144), which is preferably formed on the mechanical module (130), is provided at a distal end of the fastening projection (142).

5. Bicycle actuating device (100) according to one of the preceding claims, wherein the mechanical module (130) and the electronic module (110) are functionally coupled or couplable to each other by means of an arrangement of a plurality of switches (116), which are arranged substantially in an identical interface plane (E) on the electronic module and are oriented parallel to one another, in order to activate the bicycle component (120) by actuation of the actuating component.

6. Bicycle actuating device (100) according to Claim 1 and Claim 5, wherein the interface plane (E) intersects the outer surface (143) of the cylindrical fastening projection (142) and preferably runs parallel to a centre axis (142a) of the fastening projection (142).

7. Bicycle actuating device (100) according to one of the preceding claims, wherein the electronic module (110) and the mechanical module (130) are designed to be fixed releasably to each other without a tool, preferably by means of a snap-action connection.

8. Bicycle actuating device (100) according to one of the preceding claims, wherein an additional actuating element (133) is provided on an end side of the cylindrical fastening projection (142).

9. Modular bicycle actuating system (500), comprising a modular electronic bicycle actuating device (100) according to one of Claims 1 to 8 and a fastening device (150) for fastening the bicycle actuating device (100) to a bicycle handlebar (20), comprising a clamping clip (152) which is designed to be fixed to the fastening projection (142) of the bicycle actuating device (100).

10. Modular bicycle actuating system (500) according to the preceding claim, wherein the fastening device (150) comprises a further clamping clip (154) for fixing the fastening device (150) to the bicycle handlebar (20).

11. Modular bicycle actuating system (500) according to the preceding claim, wherein the fastening device (150) is designed to tighten the two clamping clips (152, 154) by a single screw (156), and wherein the two clamping clips (152, 154) are formed integrally or as two separate clamping clip components (252, 254) .

12. Modular bicycle actuating system (500) according to either of the two preceding claims, wherein each of the two clamping clips (152, 154) defines a clip axis (152a, 154a), and the clip axes of the two clamping clips (152, 154) are inclined in relation to each other by an angle (a) which is between 15° and 30° and is preferably approximately 20°.

13. Modular bicycle actuating system (500) according to one of Claims 9 to 12, wherein the two clamping clips (152, 154) have an identical diameter, and the fastening device (150) is preferably formed mirrorsymmetrically with respect to a plane of symmetry (S) which runs through between the two clamping clips (152, 154).

14. Modular bicycle actuating system (500) according to Claim 9, wherein the fastening device (150) comprises a connecting interface (157) for connecting the fastening device (150) to a separate handlebar clip (201), wherein the connecting interface (157) has an elongated hole (158) or a linear arrangement of a plurality of fastening openings.

## Revendications

1. Dispositif d'actionnement de bicyclette électronique modulaire (100), comprenant :
- un module électronique (110) destiné à commander électroniquement au moins un composant de bicyclette (120),
- un module mécanique (130) sans électronique qui est conçu séparément du module électronique (110), qui peut être fixé à celui-ci de manière interchangeable et qui comprend un composant de cadre (131) et au moins un composant d'actionnement (132) qui est monté de manière mobile sur le composant de cadre (131),
**caractérisé en ce que** le dispositif d'actionnement de bicyclette (100) comprend une saillie de fixation (142), de préférence cylindrique, qui est formée en partie sur le module électronique (100) et en partie sur le module mécanique (130) du fait qu'une surface extérieure (143) de la saillie de fixation (142) comprend une portion de surface extérieure (143.1) formée sur le module électronique (110) et une portion de surface extérieure (143.2) formée sur le module mécanique (130).

2. Dispositif d'actionnement de bicyclette (100) selon la revendication 1, la saillie de fixation (142) étant conçue pour être fixée dans une bride de serrage (152) d'un dispositif de fixation (150), laquelle est conçue pour correspondre en forme à la saillie de fixation (142), afin de fixer le dispositif d'actionnement de bicyclette (100) à un guidon de bicyclette (20).

3. Dispositif d'actionnement de bicyclette (100) selon l'une des revendications précédentes, la saillie de fixation (142) étant cylindrique et ayant un diamètre compris entre 20 mm et 25 mm.

4. Dispositif d'actionnement de bicyclette (100) selon la revendication 2 ou 3, une portion de sécurité (144) radialement en saillie étant prévue à une extrémité distale de la saillie de fixation (142), laquelle portion de sécurité est de préférence formée sur le module mécanique (130).

5. Dispositif d'actionnement de bicyclette (100) selon l'une des revendications précédentes, le module mécanique (130) et le module électronique (110) étant couplés ou pouvant être couplés fonctionnellement l'un à l'autre au moyen d'un ensemble de plusieurs commutateurs (116) disposés sensiblement dans le même plan d'interface (E) sur le module électronique et orientés parallèlement l'un à l'autre, afin de commander le composant de bicyclette (120) par actionnement du composant d'actionnement.

6. Dispositif d'actionnement de bicyclette (100) selon la revendication 1 et la revendication 5, le plan d'interface (E) coupant la surface extérieure (143) de la saillie de fixation cylindrique (142) et s'étendant de préférence parallèlement à un axe central (142a) de la saillie de fixation (142).

7. Dispositif d'actionnement de bicyclette (100) selon l'une des revendications précédentes, le module électronique (110) et le module mécanique (130) étant conçus pour être fixés l'un à l'autre de manière amovible et sans outil, de préférence au moyen d'une liaison par encliquetage.

8. Dispositif d'actionnement de bicyclette (100) selon l'une des revendications précédentes, un élément d'actionnement supplémentaire (133) étant prévu sur un côté frontal de la saillie de fixation cylindrique (142) .

9. Système d'actionnement de bicyclette modulaire (500), comprenant un dispositif d'actionnement de bicyclette électronique modulaire (100) selon l'une des revendications 1 à 8 et un dispositif de fixation (150) destiné à fixer le dispositif d'actionnement de bicyclette (100) à un guidon de bicyclette (20), et comprenant une bride de serrage (152) qui est conçue pour être fixée sur la saillie de fixation (142) du dispositif d'actionnement de bicyclette (100).

10. Système d'actionnement de bicyclette modulaire (500) selon la revendication précédente, le dispositif de fixation (150) comprenant une autre brie de serrage (154) destinée à fixer le dispositif de fixation (150) au guidon de bicyclette (20).

11. Système d'actionnement de bicyclette modulaire (500) selon la revendication précédente, le dispositif de fixation (150) étant conçu pour serrer les deux brides de serrage (152, 154) à l'aide d'une seule vis (156), et les deux bides de serrage (152, 154) étant conçues d'une seule pièce ou comme deux composants de bride de serrage séparés (252, 254).

12. Système d'actionnement de bicyclette modulaire (500) selon l'une des deux revendications précédentes, chacune des deux brides de serrage (152, 154) définissant un axe de bride (152a, 154a) et les axes de bride des deux brides de serrage (152, 154) étant inclinés l'un vers l'autre d'un angle (α) qui est compris entre 15° et 30° et qui est de préférence d'environ 20°.

13. Système d'actionnement de bicyclette modulaire (500) selon l'une des revendications 9 à 12, les deux brides de serrage (152, 154) ayant le même diamètre et le dispositif de fixation (150) étant de préférence conçu avec une symétrie spéculaire par rapport à un plan de symétrie (S) qui s'étend entre les deux brides de serrage (152, 154).

14. Système d'actionnement de bicyclette modulaire (500) selon la revendication 9, le dispositif de fixation (150) comprenant une interface de liaison (157) destinée à relier le dispositif de fixation (150) à une bride de guidon séparée (201), l'interface de liaison (157) comportant un trou allongé (158) ou un ensemble linéaire de plusieurs ouvertures de fixation.
